Europäisches Patentamt

European Patent Office

Office européen des brevets

(19)

(11) Veröffentlichungsnummer : **0 503 255 B1**

(12) **EUROPÄISCHE PATENTSCHRIFT**

(45) Veröffentlichungstag der Patentschrift :
13.12.95 Patentblatt 95/50

(51) Int. Cl.⁶ : **G05B 19/042**

(21) Anmeldenummer : **92101411.4**

(22) Anmeldetag : **29.01.92**

(54) **Steuermodul**

(30) Priorität : **14.03.91 CH 773/91**

(43) Veröffentlichungstag der Anmeldung :
**16.09.92 Patentblatt 92/38**

(45) Bekanntmachung des Hinweises auf die
Patenterteilung :
**13.12.95 Patentblatt 95/50**

(84) Benannte Vertragsstaaten :
**AT CH DE FR GB LI SE**

(56) Entgegenhaltungen :
**DE-A- 3 034 728**
**ELEKTRONIK Bd. 35, Nr. 22, September 1986,**
**MüNCHEN ,DE Seiten 160 - 164; V.WAIS ,O.-**
**GRAF,S.WETTACH: 'Automatisierungssystem**
**- auch für den kleineren Industriebetrieb'**

(73) Patentinhaber : **Landis & Gyr Technology**
**Innovation AG**
**CH-6301 Zug (CH)**

(72) Erfinder : **Pisch, Klaus**
**Hofstrasse 31**
**CH-6300 Zug (CH)**
Erfinder : **Degunda, Niklaus**
**Stolzengraben 21**
**CH-6317 Oberwil (CH)**
Erfinder : **Sager, Bruno**
**Buchfeldstrasse 23**
**CH-6033 Buchrain (CH)**

(74) Vertreter : **Müller, Hans-Jürgen, Dipl.-Ing. et al**
**Patentanwälte Dipl.-Ing. Hans-Jürgen Müller,**
**Dipl.-Chem.Dr. Gerhard Schupfner,**
**Dipl.-Ing. Hans-Peter Gauger,**
**Postfach**
**101161**
**D-80085 München (DE)**

EP 0 503 255 B1

## Beschreibung

Die Erfindung bezieht sich auf ein Steuermodul der im Oberbegriff des Anspruchs 1 genannten Art.

Solche Steuermodule eignen sich beispielsweise zum Aufbau von komplexen Steuerungseinrichtungen für betriebstechnische Anlagen.

Steuermodule der im Oberbegriff des Anspruchs 1 genannten Art sind unter dem Sammelbegriff "Polygyr S&M" (Firma Landis & Gyr) bekannt und beispielsweise in folgenden Druckschriften dokumentiert: "Polygyr S&M Sortimentsübersicht" (Druckschrift 5010), "Polygyr S&M Systemgrundlagen" (Druckschrift 5011), "Polygyr S&M Anlagensteuermodul RZS91.51" (Druckschrift 5015) und "Polygyr S&M Motorsteuermodul RZS91.21" (Druckschrift 5021).

Ein modulares, hierarchisch geordnetes Steuersystem ist bekannt aus DE-A-30 34 728, bei dem verschiedene Steuermodule über uni- und bidirektionale Schnittstellen mit Verarbeitungsmoduln verbunden sind. Es handelt sich hierbei um eine dynamische Zuordnung zwischen den Steuermoduln und den Verarbeitungsmoduln, wobei die genannten Verarbeitungsmodule miteinander verbunden sind und Verbindungen zu Peripherie-Einheiten aufweisen. Bei dem hier genannten Steuersystem werden die Verarbeitungsmodule von den Steuermodulen für eine Verarbeitung aufgerufen, wobei jeweils abhängig vom Systemzustand und dem gewünschten Systemverhalten der Funktionsablauf im Verarbeitungsmodul vom Steuermodul vorgegeben wird. Hierbei verändern sich die Verarbeitungsvorschriften in den Verarbeitungsmoduln dynamisch, abhängig von den Informationen des Steuermoduls. Auch die Steuermodule selbst ändern ihre Zuordnungsvorschriften dynamisch.

Ein hierarchisch organisiertes Automatisierungssystem ist auch bekannt aus ELEKTRONIK Bd. 35, Nr. 22, September 1986, München DE, Seiten 160-164; V. Wais, O.Graf, S. Wetter: "Automatisierungssystem auch für den kleineren Industriebetrieb". Hier ist eine hierarchische Strukturierung von funktionellen Softwarebausteinen einen beschrieben, die einen Prozeß innerhalb einer Automatisierungsstruktur regeln. Die Strukturierung der Tätigkeiten, die hier zur Lösung der Automatisierungsaufgabe erforderlich ist, erfolgt per Tastatur und Sichtgerät und umfaßt die "softwaremäßige" Einordnung und Verbindung von Softwarebausteinen zu einem Regelkreislauf.

Wie hieraus ersichtlich, ist der Aufbau von Steuer- und Regelungssystemen zur Regelung von komplexen Automatisierungsaufgaben zweckmäßigerweise durch eine Gliederung in einzelne Abschnitte, Gruppen und Funktionen übersichtlich zu gestalten und demzufolge insb. hierarchisch anzuordnen. Dies kann durch feste Verdrahtung, durch die Programmierung eines Verarbeitungsprozessors oder durch die kombinierte Verbindung von Steuer- und Verarbeitungsmoduln geschehen, die Ihrerseits wiederum für bestimmte Aufgaben programmiert sind.

Zum Aufbau komplexer Regelungs- und Steuereinrichtungen können Steuermodule der im Oberbegriff des Anspruchs 1 genannten Art miteinander kombiniert werden, wodurch sich beispielsweise Parallelsteuerungen, Führungs-Folge-Steuerungen, Parallel- und Führungs-Folge-Steuerungen sowie äußerst komplexe Steuerungskombinationen für größere Anlagen durch Zusammenschaltungen einer Vielzahl von Steuermoduln realisieren lassen. Dabei werden die einzelnen Steuermodule miteinander verdrahtet, und zwar einerseits zur Bildung von Steuerketten und andererseits zur Schaffung von Rückmelde- und Verriegelungsketten. Solche Steuerungen werden bei größeren Anlagen sehr unübersichtlich und sind in ihrer Wirkungsweise schwer zu durchschauen. Auch weisen die o.g. Systeme durch ihren dynamischen Charakter und durch Querverbindungen von untergeordneten Funktionsbausteinen unbestimmte und unvorhersehbare Systemzustände auf. Nicht testbare bestimmte dynamische Zustände des Systems verursachen häufig ungeahnte Fehler und erfordern einen beträchtlichen Zeitaufwand für die Fehlersuche. Außerdem ist ein großer Aufwand zur Herstellung der nötigen Verdrahtung und der Programmierung der einzelnen Bausteine erforderlich.

Der Erfindung liegt die Aufgabe zugrunde, Steuermodule zu schaffen, die sich auf einfache Weise hinsichtlich der Bildung von Steuerketten und Rückmelde- und Verriegelungsketten kombinieren lassen und einen hierarchischen, fehlerarmen und leicht überblickbaren Aufbau komplexer Steuer- und Regelungseinrichtungen gestatten.

Die genannte Aufgabe wird erfindungsgemäß durch die Merkmale des Anspruchs 1 gelöst. Vorteilhafte Ausgestaltungen ergeben sich aus den abhängigen Ansprüchen. Eine aus solchen Steuermodulen aufgebaute Steuerungseinrichtung ist im Anspruch 16 angegeben.

Nachfolgend wird ein Ausführungsbeispiel der Erfindung anhand der Zeichnung näher erläutert.

Es zeigen:

Fig. 1        ein Steuermodul,
Fig. 2        eine Zusammenschaltung von Steuermodulen,
Fig. 3        ein Blockschema eines Steuermoduls,
Fig. 4        ein Schema einer zu steuernden Anlage,

EP 0 503 255 B1

| Fig. 5 | ein Schema einer aus Steuermodulen aufgebauten Steuerungseinrichtung, |
| Fig. 6 | eine Schema einer Programm- und Daten-Organisation, |
| Fig. 7 | ein Schema einer Ablaufsteuerung, |
| Fig. 8 | ein Schema eines Funktionsblocks, |
| Fig. 9 | ein weiteres Anlagenschema und |
| Fig. 10 | ein Funktionsblock-Verknüpfungsschema. |

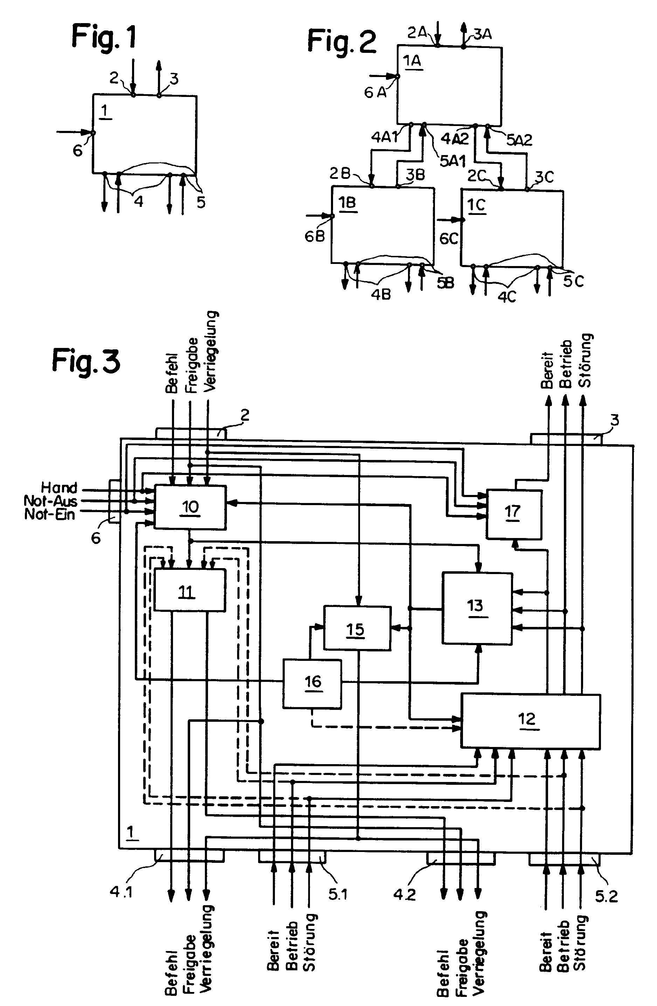

In der Fig. 1 bedeutet 1 ein Steuermodul, das einen Steuereingang 2 zur Entgegennahme von Steuerinformationen und einen Rückmeldeausgang 3 zur Abgabe von Rückmeldeinformationen besitzt. Das Steuermodul 1 weist außerdem Steuerausgänge 4 zur Ausgabe von Steuerinformationen und Rückmeldeeingänge 5 zur Entgegennahme von Rückmeldeinformationen auf. Vorteilhaft ist außerdem ein Hilfssteuereingang 6 vorhanden.

Die Fig. 2 zeigt die Zusammenschaltung dreier Steuermodule 1A, 1B und 1C. Ein erster Steuerausgang 4A1 des Steuermoduls 1A ist mit einem Steuereingang 2B des Steuermoduls 1B und ein erster Rückmeldeeingang 5A1 ist mit einem Rückmeldeausgang 3B des Steuermoduls 1B verbunden. In gleicher Weise ist ein zweiter Steuerausgang 4A2 des Steuermoduls 1A an einen Steuereingang 2C des Steuermoduls 1C und ein zweiter Rückmeldeeingang 5A2 an einen Rückmeldeausgang 3C des Steuermoduls 1C angeschlossen.

Damit wird offenbar, daß die Steuereingänge 2A, 2B und 2C, also grundsätzlich die Steuereingänge 2, dazu bestimmt sind, mit Steuerausgängen 4 übergeordneter Steuermodule 1 verbunden zu werden, während die Rückmeldeausgänge 3A, 3B und 3C, also grundsätzlich die Rückmeldeausgänge 3, dazu bestimmt sind, mit Rückmeldeeingängen 5 übergeordneter Steuermodule 1 verbunden zu werden. Auf diese Weise werden Steuermodule 1 hierarchisch angeordnet, so daß bezogen auf ein Steuermodul 1 von einem übergeordneten Steuermodul 1 und von nachgeordneten Steuermodulen 1 gesprochen werden kann.

Vorteilhaft haben die Steuermodule 1A, 1B und 1C je einen Hilfssteuereingang 6A bzw. 6B bzw. 6C.

Vorteilhaft sind die Steuerinformationen nicht nur Steuerbefehle wie beispielsweise EIN- und AUS-Befehle, sondern außerdem auch Freigabe- und Verriegelungssignale. Diese Befehle und Signale können zudem stufig sein, also beispielsweise "AUS", "EIN Stufe 1" und "EIN Stufe 2".

Die Hilfssteuereingänge 6A bis 6C sind dazu bestimmt, Hilfssteuerinformationen entgegenzunehmen. Diese Hilfssteuerinformationen bestehen vorteilhaft aus drei Signalen, nämlich "Handbetrieb", "Not-Ein-Betrieb" und "Not-Aus-Betrieb".

Die Hilfssteuerinformation "Handbetrieb" kann vorteilhaft folgende Werte annehmen: "Automatik", "Hand AUS", "Hand EIN Stufe 1", "Hand EIN Stufe 2" usw. Die Hilfssteuerinformation "Not-Ein-Betrieb" kann vorteilhaft die folgenden Werte annehmen: "Not-Ein inaktiv", "Not-Ein Stufe 1", "Not-Ein Stufe 2" usw.. In ähnlicher Weise kann die Hilfssteuerinformation "Not-Aus-Betrieb" die folgenden Werte annehmen: "Not-Aus inaktiv" und "Not-Aus aktiv".

An seinem Steuereingang 2 nimmt das Steuermodul 1 die Steuerinformation entgegen. Das Steuermodul 1 transformiert diese Steuerinformation in einer durch Parameter des Steuermoduls 1 bestimmten Weise an die Steuerausgänge 4, was später beschrieben wird.

An seinen Rückmeldeeingängen 5 nimmt das Steuermodul 1 die Rückmeldeinformationen entgegen. Die Rückmeldeinformationen können vorteilhaft aus drei Signalen "Bereit", "Betrieb" und "Störung" bestehen und ebenfalls stufig sein. Das Steuermodul 1 transformiert diese Rückmeldeinformationen in einer gleichfalls durch Parameter des Steuermoduls 1 bestimmten Weise an den Rückmeldeausgang 3, was ebenfalls später beschrieben wird.

Die Rückmeldeinformationen wirken innerhalb des Steuermoduls 1 auf die Verarbeitung der Steuerinformationen ein, was später beschrieben wird.

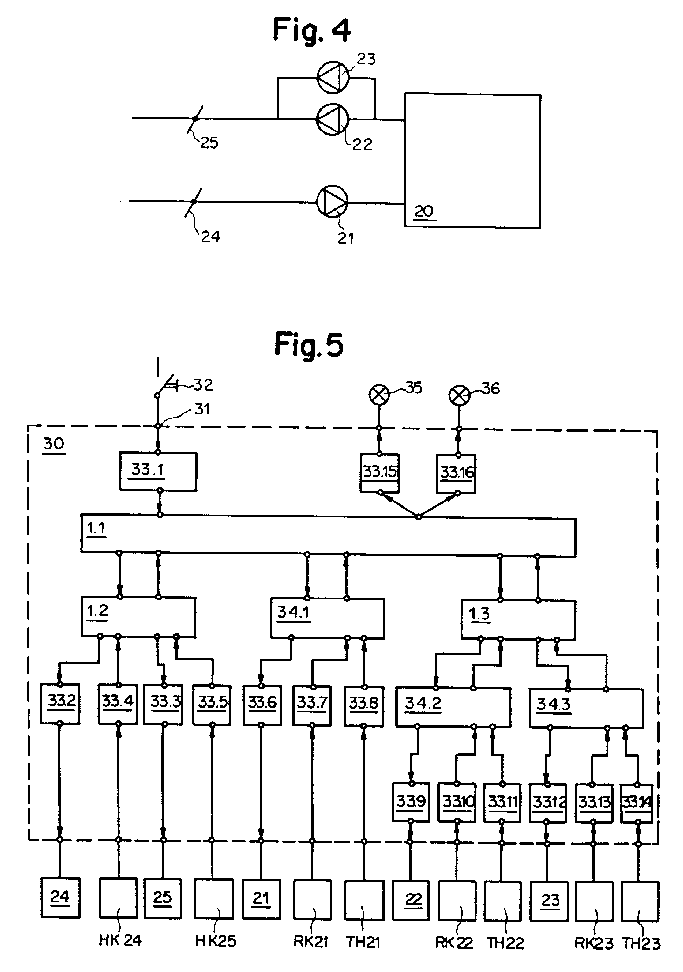

Die Fig. 3 zeigt ein Blockschema eines Steuermoduls 1 in seiner allgemeinen Form. An seinem Steuereingang 2 liegen die Befehlsinformationen "Befehl", "Freigabe" und "Verriegelung" an. Sein Rückmeldeausgang 3 gibt die drei Rückmeldinformationen "Bereit", "Betrieb" und "Störung" ab. Es weist einen ersten Befehlsausgang 4.1 und einen zweiten Befehlsausgang 4.2 auf, an denen die Befehlsinformationen "Befehl", "Freigabe" und "Verriegelung" an nachgeordnete Steuermodule 1 und/oder Anlagen-Aggregate ausgegeben werden. Das Steuermodul 1 weist außerdem einen ersten Rückmeldeeingang 5.1 und einen zweiten Rückmeldeeingang 5.2 auf, an denen die Rückmeldeinformationen "Bereit", "Betrieb" und "Störung" von nachgeordneten Steuermodulen 1 und/oder Anlagen-Aggregaten anliegen. An seinem Hilfssteuereingang 6 liegen die Hilfssteuerinformationen "Hand", "Not-Aus" und "Not-Ein" an.

Das Steuermodul 1 enthält einen Befehlseinschränkungsblock 10, einen Befehlsgenerierungsblock 11, einen Meldungsaufbereitungsblock 12, einen Überwachungsblock 13, einen Verriegelungsgenerierungsblock 15, einen Parameter-Satz 16 und einen Bereitschaftssperrblock 17 auf.

Die drei Befehlsinformationen gelangen vom Steuereingang 2 auf drei Eingänge des Befehlseinschränkungsblocks 10. Die Befehlsinformation "Freigabe" ist außerdem mit den Steuerausgängen 4.1 und 4.2 direkt

EP 0 503 255 B1

verbunden.

Die drei Hilfssteuerinformationen gelangen vom Hilfssteuereingang 6 einerseits auf drei weitere Eingänge des Befehlseinschränkungsblocks 10 und andererseits auf drei Eingänge des Bereitschaftssperrblocks 17.

Der Befehlseinschränkungsblock 10 besitzt zwei weitere Eingänge. Am einen werden Parameter vom Parameter-Satz 16 an den Befehlseinschränkungsblock 10 übergeben und am anderen steht eine Störungsmeldung an, die vom Überwachungsblock 13 stammt. Am einzigen Ausgang des Befehlseinschränkungsblocks 10 wird ein von diesem produzierter eingeschränkter Befehl ausgegeben und einerseits an einen Eingang des Befehlsgenerierungsblocks 11 und andererseits an einen Eingang des Überwachungsblocks 13 übergeben.

Der Befehlsgenerierungsblock 11 erzeugt in später zu beschreibender Weise transformierte Befehle, die separat an die Steuerausgänge 4.1 und 4.2 weitergeleitet werden.

Die Steuerinformation "Verriegelung" gelangt vom Steuereingang 2 zusätzlich an einen ersten Eingang des Verriegelungsgenerierungsblock 15, an dessen weiteren Eingängen einerseits die vom Überwachungsblock 13 produzierte Störungsmeldung und andererseits Parameter des Parameter-Satzes 16 übergeben werden. Aus diesen drei Eingangssignalen erzeugt der Verriegelungsgenerierungsblock 15 in später beschriebener Weise eine neue Steuerinformation "Verriegelung" für die nachgeschalteten Steuermodule 1 und/oder Anlagen-Aggregate, die sowohl dem Steuerausgang 4.1 als auch dem Steuerausgang 4.2 zugeleitet wird.

Die drei an den Rückmeldeeingängen 5.1 und 5.2 jeweils anliegenden Rückmeldeinformationen "Bereit", "Betrieb" und "Störung" werden an Eingänge des Meldungsaufbereitungsblocks 12 übergeben. Unter Berücksichtung der an einem weiteren Eingang anliegenden Störungsmeldung des Überwachungsblocks 13 erzeugt der Meldungsaufbereitungsblock 12 in noch zu beschreibender Weise transformierte Rückmeldeinformationen, die einerseits Eingängen des Überwachungsblocks 13 zugeführt werden. Andererseits werden zwei der drei Rückmeldeinformationen, nämlich "Betrieb" und "Störung" dem Rückmeldeausgang 3 zugeführt, während die dritte Rückmeldeinformation, nämlich "Bereit", dem Bereitschaftssperrblock 17 zugeführt wird. Von einem Ausgang des Bereitschaftssperrblock 17 gelangt die durch den Bereitschaftssperrblock beeinflußte Rückmeldeinformation "Bereit" zum Rückmeldeausgang 3.

Der Überwachungsblock 13 besitzt außer den zuvor schon erwähnten Eingängen einen weiteren Eingang, an dem Informationen des Parameter-Satzes 16 anstehen.

In der Fig. 3 sind weitere Verbindungen gestrichelt eingezeichnet. Solche Verbindungen sind nur bei bestimmten Typen von Steuermodulen 1 vorhanden und werden bei der Beschreibung dieser Typen erwähnt.

Der Parameter-Satz 16 bestimmt das Verhalten des Steuermoduls 1. Er enthält beispielsweise Parameter, die Überwachungsfunktionen definieren. Beispielsweise wird mit Parametern "Überwachung" für die Signale "Bereit", "Betrieb" und "Störung" (Dies entspricht "Bereitschafts-Überwachung", "Betriebs-Überwachung" und "Störungs-Überwachung"), die auf "EIN" oder "AUS" gesetzt werden können, bestimmt, ob diese Signale Einfluß auf die Verarbeitung der Steuerinformationen haben sollen. Die Art des Einflusses auf die Verarbeitung wird durch weitere Parameter bestimmt, nämlich Parameter "Störabschaltung" und "Verriegeln", die ebenfalls auf "EIN" oder "AUS" gesetzt werden können.

Auf weitere Parameter wird bei der nachfolgenden Beschreibung des grundsätzlichen Verhaltens eines Steuermoduls 1 und der einzelnen Typen solcher Steuermodule 1 eingegangen.

Nachfolgend wird beschrieben, was die einzelnen Elemente des Steuermoduls 1 tun und wie die einzelnen Elemente zusammenwirken. Dies geschieht anhand der Fig. 3, die den allgemeinen Aufbau eines Steuermoduls 1 wiedergibt. Vorteilhaft ist es, verschiedene Typen von Steuermodulen 1 vorzusehen. Ein erster Typ ist der Typ "FOLGE", der dazu bestimmt ist, nachgeordnete Steuermodule 1 und/oder Anlagen-Aggregate in definierbarer Folge anzusteuern. Ein zweiter Typ ist der Typ "PARALLEL", der zur parallelen Ansteuerung nachgeordneter Steuermodule 1 und/oder Anlagen-Aggregate dient. Weitere Typen sind "RESERVE" und "SEQUENZ" die später beschrieben werden.

Der Befehlseinschränkungsblock 10 führt folgende Verarbeitung durch: In einem ersten Schritt wird der Wert der Hilfssteuerinformation "Hand" überprüft. Hat diese den Wert "Automatik", so bleibt bei der Weiterverarbeitung die Steuerinformation "Befehl" zunächst unverändert. In allen anderen Fällen ("Hand AUS", "Hand EIN Stufe 1", "Hand EIN Stufe 2") hat die Hilfssteuerinformation Vorrang vor der Steuerinformation "Befehl". Das heißt, daß ohne Rücksicht auf den Wert der Steuerinformation "Befehl" am Steuereingang 2 die Steuerinformation "Befehl" den Wert der Hilfssteuerinformation übernimmt. Angenommen, die Steuerinformation "Befehl" habe den Wert "EIN Stufe 3" und die Hilfssteuerinformation "Hand" habe den Wert "Hand EIN Stufe 1", so ist der resultierende Befehl "EIN Stufe 1".

In einem zweiten Schritt wird der Befehl mit der Freigabe verglichen und gegebenenfalls eingeschränkt. Angenommen, der Befehl, die Freigabe und die Verriegelung können die Stufen 0 bis 5 annehmen und der aktuelle Befehl sei "Stufe 5". Gleichzeitig liegt aber eine Freigabe nur bis Stufe 4 vor, so wird der Befehl auf den Wert "Stufe 4" reduziert. In einem dritten Schritt wird der Wert der Hilfssteuerinformation "Not-Aus" überprüft. Ist "Not-Aus" aktiv, wird der Befehl auf "Aus" gesetzt; ist "Not-Aus" inaktiv, bleibt der Befehl unverändert.

4

In einem vierten Schritt wird der Wert der Hilfssteuerinformation "Not-Ein" überprüft. Ist "Not-Ein" inaktiv, bleibt der Befehl unverändert; in allen anderen Fallen ("Not-Ein Stufe 1", "Not-Ein Stufe 2" usw.) hat die Hilfssteuerinformation Vorrang vor dem Befehl, der sich aus den vorangegangenen Schritten ergeben hat. Das heißt, daß ohne Rücksicht auf den bisherigen Wert des Befehls der Befehl den Wert der Hilfssteuerinformation übernimmt.

In ähnlicher Weise wie bei der Verarbeitung der Freigabe greift in einem fünften Schritt die Verriegelung ein: Wäre beispielsweise die Verriegelung "ab Stufe 3", so würde der Befehl auf "Stufe 2" reduziert. In Abhängigkeit davon, ob im Parameter-Satz 16 der Parameter "Störabschaltung" auf "EIN" gesetzt ist, wird in einem sechsten Schritt, sofern eine Störungsmeldung vom Überwachungsblock 13 vorliegt, eine Störabschaltung dadurch erzeugt, daß der Befehl "Stufe 2" unterdrückt und stattdessen ein Befehl "AUS" erzeugt wird. Andernfalls wird der ursprüngliche Befehl trotz Störungsmeldung beibehalten.

Zusätzlich zur zuvor beschriebenen Befehlseinschränkung durch Freigabe, Verriegelung und die Hilfssteuerinformationen kann der Befehlseinschränkungsblock 10 vorteilhaft auch noch zeitliche Befehlseinschränkungen vornehmen, falls keine Hilfssteuerinformation den Befehl verändert. So kann beispielsweise ein Befehl zeitlich verzögert weitergeleitet werden, wobei die Verzögerungszeit im Parameter-Satz 16 durch Parameter "Einschalt-Verzögerung", "Ausschalt-Verzögerung", "Minimal-Laufzeit" und "Minimal-Stillstandszeit" definiert ist. Mittels der Einschalt-Verzögerung wird erreicht, daß ein Befehl ungleich "AUS", also beispielsweise "EIN Stufe 1", nur dann weitergeleitet wird, wenn er während einer bestimmten Zeit am Steuermodul 1 ansteht.

Analoges gilt für die Ausschaltverzögerung für den Befehl "AUS": Der "AUS"-Befehl wird nur dann weitergeleitet, wenn er länger am Steuermodul 1 ansteht als die Ausschaltverzögerung.

Zusammengefaßt besteht also die Funktion des Befehlseinschränkungsblocks 10 darin, eine Menge von Steuerinformationen sinnvoll nach Prioritäten zu verarbeiten. Grundsätzlich haben die Hilfssteuerinformationen Vorrang vor der Steuerinformation "Befehl". Not-Eingriffe nehmen dabei im Gegensatz zum Hand-Eingriff keine Rücksicht auf die Steuerinformation "Freigabe" und können nur durch die Steuerinformation "Verriegelung" eingeschränkt werden.

Der Befehlsgenerierungsblock 11 erzeugt Befehle für die einzelnen nachgeordneten Steuermodule 1 bzw. Anlagen-Aggregate entsprechend seiner spezifischen Aufgabe, zum Beispiel bei einem Steuermodul 1 des Typs "PARALLEL" die einzelnen Elemente gleichzeitig zu schalten. Einzelheiten anderer Steuermodultypen werden bei der Beschreibung der einzelnen Steuermodultypen genannt.

Die vom Befehlsgenerierungsblock 11 erzeugten Befehle werden den Steuerausgängen 4 zugeführt. Das Signal "Freigabe" gelangt vom Steuereingang 2 unverändert zu den Steuerausgängen 4. Damit wird erreicht, daß nachgeordnete Steuermodule 1 in gleicher Weise eine eingeschränkte Freigabe erfahren, so daß sie durch einen diesem nachgeordneten Steuermodul 1 aus anderer Quelle zugeleiteten Befehl höherer Stufe, zum Beispiel einen Eingriff durch die Hilfssteuerinformation "Hand", nicht entsprechend dieser höheren Stufe eingeschaltet werden können.

Das Signal "Verriegelung" wird vom Steuereingang 2 dem Verriegelungsgenerierungsblock 15 zugeführt. Falls der Parameter "Verriegeln" des Parameter-Satzes 16 auf "EIN" gesetzt ist, wird die an Steuereingang 2 anliegende Verriegelung korrigiert entsprechend der vom Überwachungsblock 13 gemeldeten Störungsstufe. Angenommen, am Steuereingang 2 liege ein Verriegelungssignal "ab Stufe 4" an und der Überwachungsblock 13 meldet Störung "Stufe 2", so wird die Verriegelung geändert von "ab Stufe 4" in "ab Stufe 2". Allgemein gesagt wird also auf die tiefere Stufe verriegelt, was einer Minimalauswahl entspricht. Ist der Parameter "Verriegeln" auf "AUS" gesetzt, so wird das Verriegelungssignal vom Verriegelungsgenerierungsblock 15 nicht verändert, so daß das am Steuereingang 2 anliegende Verriegelungssignal unverändert an die Steuerausgänge 4 gelangt. Damit wird hinsichtlich der Verriegelung der gleiche Effekt erzielt wie zuvor für die Freigabe beschrieben: nachgeordnete Steuermodule 1 erfahren eine Verriegelung, so daß sie durch einen diesem nachgeordneten Steuermodul 1 aus anderer Quelle, zum Beispiel durch die Hilfsteuerinformationen, zugeleiteten Befehl gleicher oder höherer Stufe nicht entsprechend dieser gleichen oder höheren Stufe eingeschaltet werden können.

Der Meldungsaufbereitungsblock 12 verknüpft die an den Rückmeldeeingängen 5 liegenden Informationen zu einer Gesamtinformation: Die Verarbeitung ist abhängig vom Typ des Steuermoduls 1 und ist beispielsweise beim Typ "PARALLEL" wie nachstehend beschrieben.

Am "Bereit"-Ausgang des Meldungsaufbereitungsblocks 12 kann ein Bereit-Signal nur dann auftreten, wenn alle Rückmeldeeingänge 5 "bereit" melden. Bei stufigem Bereit-Signal entspricht das resultierende Bereit-Signal der kleinsten Stufe der anliegenden Bereit-Signale.

Die an den Rückmeldeeingängen 5 anliegenden Betriebs-Signale werden so aufbereitet, daß ein Betriebs-Signal einer bestimmten Stufe am Rückmeldeausgang 3 nur dann zustandekommen kann, wenn an allen Rückmeldeeingängen 5 das gleiche Betriebs-Signal dieser Stufe anliegt.

Am Rückmeldeausgang 3 tritt ein Störung-Signal schon dann auf, wenn an einem der Rückmeldeeingänge

eine Störung ansteht oder innerhalb des Steuermoduls 1 vom Überwachungsblock 13 eine Störung gemeldet wird. Bei stufigen Störung-Signalen entspricht das resultierende Störungssignal dem tiefsten Störungssignal.

Abweichungen vom vorgenannten Verhalten werden bei der Beschreibung der einzelnen Steuermodul-Typen genannt.

Das "Bereit"-Signal des Meldungsaufbereitungsblocks 12 wird vom Bereitschaftssperrblock 17 weiterverarbeitet. Der Bereitschaftssperrblock 17 überprüft alle drei Hilfssteuerinformationen "Hand", "Not-Aus" und "Not-Ein". Wenn die Hilfssteuerinformationen "Hand" den Wert "Automatik", "Not-Aus" den Wert "inaktiv" und "Not-Ein" ebenfalls den Wert "inaktiv" aufweisen, bleibt das "Bereit"-Signal unverändert, wie es vom Meldungsaufbereitungsblock 12 gebildet worden ist. In allen anderen Fällen wird das "Bereit"-Signal auf den Wert "AUS" gesetzt. Dadurch wird dem übergeordneten Steuermodul 1 zusätzlich zu den Rückmeldungen von untergeordneten Steuermodulen 1 vermittelt, daß durch einen Eingriff mit einer Hilfssteuerinformation trotz eventuell eigentlich bereiter untergordneter Steuermodule 1 ein Automatik-Betrieb nicht mehr möglich ist.

Sinn der oben beschriebenen Aufbereitung der Rückmeldeinformationen und deren Weitergabe an ein übergeordnetes Steuermodul 1 ist es, daß das übergeordnete Steuermodul 1 auf eine reduzierte Bereitschaft, Betriebs-Meldung und/oder Störungs-Meldung des nachgeordneten Steuermoduls 1 genau gleich reagieren kann, wie das hier beschriebene Steuermodul 1 seinerseits auf reduzierte Bereit-Meldungen, Betriebs-Meldungen und/oder Störungs-Meldungen seiner nachgeordneten Steuermodule 1 reagiert. Durch diese Art der Verarbeitung und Weiterleitung der Rückmeldeinformationen wird erreicht, daß auf zusätzliche Rückmelde- und Verriegelungsketten, wie sie beim Stand der Technik erforderlich sind, völlig verzichtet werden kann. Dies dient vor allem auch der Übersichtlichkeit der gesamten Steuerungseinrichtung.

Der Überwachungsblock 13 führt drei Überwachungsarten aus: Bereitschafts-Überwachung, Betriebs-Überwachung und Störungs-Überwachung. Für jede dieser Überwachunsgarten existiert im Parameter-Satz 16 ein Parameter, der zwei Werte annehmen kann, nämlich "EIN" und "AUS". Nachfolgend wird geschildert, was bei den einzelnen Überwachunsgarten geschieht, wenn der Parameter auf "EIN" gesetzt ist.

Bei der Bereitschafts-Überwachung wird das Signal "Bereit" daraufhin überprüft, ob es seinem maximal möglichen Wert entspricht. Der maximal mögliche Wert ist die höchste mögliche Betriebsstufe des Steuermoduls 1, die im Parameter-Satz 16 festgelegt ist. Entspricht das Signal "Bereit" nicht seinem maximal möglichen Wert, was bedeutet, daß mindestens eine Stufe gestört ist, so meldet der Überwachungsblock 13 auf seinem Ausgang eine Störung, auf die der Befehlseinschränkungsblock 10, der Meldungsaufbereitungsblock 12 und der Verriegelungsgenerierungsblock 15 wie zuvor beschrieben reagieren. Angenommen, die maximal mögliche Stufe ist "Stufe 5" und gemeldet wird "Bereit Stufe 3", so meldet der Überwachungsblock 13 Störung "Stufe 4".

Bei der Betriebs-Überwachung wird geprüft, ob das Signal "Betrieb" mit dem Ausgang des Befehlseinschränkungsblocks 10 übereinstimmt. Stimmen die beiden Signale nicht überein, so wird das als Störung identifiziert, wobei die gemeldete Störstufe dem Ausgang des Befehlseinschränkungsblock 10 entspricht. Damit bei dieser Überwachungsart Umschaltvorgänge überhaupt möglich sind, wird nach der Identifizierung einer Störung der Ablauf einer Rückmeldezeit abgewartet, bis ein Störungssignal am Ausgang des Überwachungsblocks 13 erscheint. Kommen die beiden verglichenen Signale innerhalb der Rückmeldezeit zur Übereinstimmung, so wird keine Störung generiert. Die Rückmeldezeit ist wählbar und im Parameter-Satz 16 definiert. Auf das Störungssignal reagieren wiederum der Befehlseinschränkungsblock 10, der Meldungsaufbereitungsblock 12 und der Verriegelungsgenerierungsblock 15 wie zuvor beschrieben.

Bei der Störungsüberwachung wird das vom Meldungsaufbereitungsblock 12 generierte Störungssignal direkt auf den Ausgang des Überwachungsblocks 13 übernommen, worauf der Befehlseinschränkungsblock 10, der Meldungsaufbereitungsblock 12 und der Verriegelungsgenerierungsblock 15 gleichfalls wie zuvor beschrieben reagieren.

Mit der vorstehenden allgemeinen Beschreibung des Verhaltens eines Steuermoduls 1 ist zugleich auch schon der Typ "PARALLEL" beschrieben. Bei ihm werden die Steuerausgänge 4.1, 4.2 gleichzeitig aktiviert.

Nachfolgend wird zunächst der Typ "FOLGE" beschrieben, jedoch nur insoweit, als Abweichungen gegenüber dem zuvor beschriebenen Allgemeinen vorhanden sind.

Beim Steuermodul 1 des Typs "FOLGE" werden dem Befehlsgenerierungsblock 11 zusätzlich die Signale "Betrieb" der Rückmeldeinformationen von den Rückmeldeeingängen 5.1 und 5.2 zugeführt.

Die Aufgabe des Steuermoduls 1 des Typs "FOLGE" ist es, die an den Steuerausgängen 4.1 und 4.2 angeschlossenen Elemente in bestimmter Reihenfolge nacheinander einzuschalten. Die Reihenfolge kann dabei festliegen, indem zuerst das am Steuerausgang 4.1 angeschlossene Element eingeschaltet und daran anschließend das am Steuerausgang 4.2 angeschlossene Element. Vorteilhaft kann die Reihenfolge der Ansteuerung der einzelnen Elemente jedoch durch den Parameter-Satz 16 bestimmt sein: Für jeden Steuerausgang 4 existiert ein Parameter im Parameter-Satz 16, der angibt, an wievielter Stelle in der Reihenfolge der jeweilige Ausgang beim Schalten angesteuert wird.

Es sei nun angenommen, das Steuermodul 1 habe entgegen der Fig. 3 nicht nur zwei Steuerausgänge 4, sondern deren drei, und nicht nur zwei Rückmeldeeingänge 5, sondern deren drei. Angenommen sei, der Befehlsgenerierungsblock 11 erhalte vom Befehlseinschränkungsblock 10 den Befehl "EIN Stufe 3". In einem ersten Schritt setzt der Befehlsgenerierungsblock 11 den Befehl am ersten Steuerausgang 4 auf "EIN Stufe 3". Daran anschließend wartet der Befehlsgenerierungsblock 11 auf das Eintreffen des Betriebssignals "Betrieb Stufe 3" am ersten Rückmeldeeingang 5.

Erst wenn dieses Signal eintrifft, generiert der Befehlsgenerierungsblock 11 den nächsten Befehl: Er setzt in einem zweiten Schritt den Befehl am zweiten Steuerausgang 4 auf "EIN Stufe 3". Anschließend wartet der Befehlsgenerierungsblock 11 auf das Eintreffen des Betriebssignals "Betrieb Stufe 3" am zweiten Rückmeldeausgang 5. Sobald dieses Signal eintrifft, erzeugt der Befehlsgenerierungsblock 11 in einem dritten Schritt den Befehl "EIN Stufe 3" am dritten Steuerausgang 4. Beim Steuermodul 1 des Typs "FOLGE" werden die Steuerausgänge 4.1, 4.2 in einer durch Parameter des Steuermoduls 1 bestimmten Reihenfolge aktiviert.

Nachfolgend wird das Steuermodul 1 des Typs "RESERVE" beschrieben. Bei ihm existieren gegenüber der grundsätzlichen Ausführung eines Steuermoduls 1 noch folgende weitere Verbindungen: Die Rückmeldesignale "Störung" werden von den Rückmeldeeingängen 5 auch an den Befehlsgenerierungsblock 11 geführt und der Meldungsaufbereitungsblock 12 wird vom Parameter-Satz 16 beeinflußt.

Die hauptsächliche Funktion des Steuermoduls 1 vom Typ "RESERVE" ist, für ein in Störung fallendes Element ein Ersatzelement zu aktivieren.

Es sei angenommen, vom Steuermodul 1 des Typs "RESERVE" werden zwei Pumpen angesteuert, von denen eine jeweils in Betrieb sein soll. Normalerweise läuft die erste Pumpe. Nur dann, wenn diese im Betrieb gestört ist, soll die zweite Pumpe laufen. Es können auch mehr Ersatzelemente als nur zwei angesteuert werden, wenn das Steuermodul 1 weitere Steuerausgänge 4 und Rückmeldeeingänge 5 aufweist, was später noch beschrieben wird.

Um die Funktion des Steuermoduls 1 vom Typ "RESERVE" zu verdeutlichen, sei angenommen, das Steuermodul 1 habe drei Paare von Steuerausgängen 4 und Rückmeldeeingängen 5, an deren erstes Paar ein normalerweise zu betreibendes Element, ein Führungselement, angeschlossen ist. An das zweite Paar sei ein erstes Reserveelement und an das dritte Paar ein zweites Reserveelement angeschlossen.

Erhält das Steuermodul 1 an seinem Steuereingang 2 den Befehl "EIN Stufe 2", so wird vom Befehlsgenerierungsblock 10 ein Befehl "EIN Stufe 2" für das Führungselement erzeugt. Das Führungselement geht somit in Betrieb. Ist es gestört, was durch ein Rückmeldesignal "Störung" am zugehörigen Rückmeldeeingang 5 gemeldet wird, so werden anschließend vom Befehlsgenerierungsblock 10 gleichzeitg ein Befehl "EIN Stufe 2" für das erste Reserveelement und ein Befehl "AUS" für das Führungselement erzeugt. Nun geht das erste Reserveelement in Betrieb. Wird auch dieses gestört, was wiederum durch ein Rückmeldesignal "Störung" am zugehörigen Rückmeldeeingang 5 gemeldet wird, so werden anschließend vom Befehlsgenerierungsblock 10 gleichzeitig ein Befehl "EIN Stufe 2" für das zweite Reserveelement und ein Befehl "AUS" für das erste Reserveelement erzeugt. Damit geht das zweite Reserveelement in Betrieb.

Abweichend gegenüber der grundsätzlichen Ausführung ist beim Steuermodul 1 des Typs "RESERVE" auch die Verarbeitung der Störungsmeldungen von den nachgeordneten Elementen. Eine Störungsmeldung auf den Rückmeldeausgang 5 erfolgt nur dann, wenn das letzte Reserveelement, im obigen Beispiel also das zweite Reserveelement, Störung meldet. Welches Element das letzte Reserveelement ist, wird durch einen Parameter im Parameter-Satz 16 bestimmt. Dann, wenn das letzte Reserveelement Störung meldet, und nur dann liegt eine den Betrieb beeinträchtigende Störung vor, wird dem übergeordneten Steuermodul 1 die Störung signalisiert.

Die Betriebs- und Bereitschaftsmeldungen beim Steuermodul 1 des Typs "RESERVE" werden wie folgt ausgewertet: Von den an den Rück-meldeeingängen 5 anliegenden Informationen wird nur diejenige an das übergeordnete Steuermodul 1 weitergeleitet, die dem bei einem Steuerbefehl tatsächlich einzuschaltenden Element entspricht.

Vorstehend wurde geschildert, wie das Einschalten eines Reserveelements durch ein Störungssignal erfolgt. Vorteilhaft ist es, wenn nicht nur das Rückmeldesignal "Störung" ausgewertet wird, sondern wenn auch die zuvor schon erwähnten Überwachungsparameter "Betriebsüberwachung" und "Bereitschaftsüberwachung" berücksichtigt werden.

Wird der Parameter "Bereitschaftsüberwachung" auf "EIN" gesetzt, so wird ein Reserveelement bereits dann aktiviert, wenn das Führungselement oder ein vorrangiges Ersatzelement keine Bereitschaft meldet. Auf das Auftreten einer Störung kommt es dann nicht mehr an.

Wird der Parameter "Betriebsüberwachung" auf "EIN" gesetzt, so wird ein Reserveelement bereits dann aktiviert, wenn das Führungselement oder ein vorrangiges Ersatzelement bis zum Ablauf der schon erwähnten Rückmeldezeit nicht seinen Betrieb zurückmeldet.

Beim Steuermodul 1 des Typs "RESERVE" wird also ein zweiter Steuerausgang 4.2 dann aktiviert, wenn an einem zum ersten Steuerausgang 4.1 zugehörigen ersten Rückmeldeeingang 5.1 eine Störungsmeldung anliegt.

Ein weiterer Typ von Steuermodul 1 ist der Typ "SEQUENZ", der nachfolgend beschrieben wird. Im Unterschied zum Steuermodul 1 des Typs "PARALLEL" werden die an das Steuermodul 1 angeschlossenen Elemente - nachgeordnete Steuermodule 1 und/oder Aggregat-Module - indirekt über mehrere Sequenzen, das heißt zeitlich gestaffelte Stufenbefehle im Sinne von Zwischenschritten, auf die letztlich zu erreichende Stufe geschaltet. Die Anzahl der Sequenzen, die Dauer der einzelnen Sequenzen und die Stufenbefehle für die einzelnen angeschlossenen Elemente pro Sequenz für jede Stufe, die vom Befehlseinschränkungsblock 10 ausgegeben werden kann, sind mittels Parametern des Parameter-Satzes 16 festlegbar. Dieser komplexe Zusammenhang wird nachfolgend an einem Beispiel erläutert.

Ein Steuermodul 1 des Typs "SEQUENZ" habe zwei Befehlsausgänge 4 zu nachgeordneten Elementen. Der Befehlseinschränkungsblock 10 gebe den Befehl "EIN Stufe 2" an den Befehlsgenerierungsblock 11. Sind die Parameter des Parameter-Satzes 16 entsprechend gesetzt, werden die einzelnen Elemente beispielsweise wie folgt eingeschaltet: In einer ersten Sequenz, das heißt in einem ersten Zwischenschritt, wird das erste Element während einer bestimmten Zeit, zum Beispiel eine Minute, auf "EIN Stufe 1" geschaltet, während das zweite Element auf "AUS" bleibt. Nach Ablauf der bestimmten Zeit wird in einer zweiten Sequenz das erste Element für eine weitere bestimmte Zeit, zum Beispiel drei Minuten, auf "EIN Stufe 2" und gleichzeitig das zweite Element auf "EIN Stufe 1" geschaltet. Nach Ablauf der Zeit von beispielsweise drei Minuten wird das zweite Element auf "EIN Stufe 2" geschaltet. Auch beim Ausschaltvorgang, beispielsweise von "EIN Stufe 2" auf "AUS", können entsprechende Sequenzen einstellbar sein.

Erhält der Befehlsgenerierungsblock 11 vom Befehlseinschränkungsblock 10 den Befehl "EIN Stufe 3", so werden zuerst die drei zuvor genannten Sequenzen durchlaufen, ehe weitere, wiederum beliebig festlegbare Sequenzen von der Stufe 2 zur Stufe 3 durchlaufen werden.

In den Fig. 1 bis 3 sind Steuermodule 1 dargestellt, die jeweils zwei Steuerausgänge 4 zu nachgeordneten Steuermodulen 1 und zwei Rückmeldeeingänge 5 von nachgeordneten Steuermodulen 1 aufweisen. Die Zahl dieser Steuerausgänge 4 und Rückmeldeeingänge 5 kann größer sein, beispielsweise sechs. Sind mehr als zwei Steuerausgänge 4 und Rückmeldeeingänge 5 vorhanden, ist es vorteilhaft, die Anzahl der benutzten und somit aktiv geschalteten Aus- und Eingänge durch einen Parameter im Parameter-Satz 16 zu bestimmen.

Zum Aufbau einer Steuerungseinrichtung werden außer den zuvor genannten Steuermodulen 1 noch weitere Module benötigt, die die Verbindung bilden zwischen den Steuermodulen 1 und den Elementen der Anlage. Elemente der Anlage sind dabei beispielsweise Anlagen-Schalter, Meßwertgeber und Motoren. Die weiteren Module können unterschieden werden in Aggregat-Module und Schnittstellen-Module. Aggregat-Module dienen beispielweise der Ansteuerung von Motoren, während Schnittstellen-Module beispielsweise zum Anschluß von Schaltern und Meßwertgebern dienen. Reale Elemente werden beispielsweise durch in Schaltschränken angeordnete Relais angesteuert, die bei Leistungsschaltungen ihrerseits zum Beispiel Schütze ansteuern. Rückmeldungen von Elementen der Anlage erfolgen ebenfalls durch Relais, die von Öffner- oder Schließ-Kontakten betätigt werden.

Nachfolgend wird das Prinzip eines Aggregat-Moduls vom Typ "MOTOR" beschrieben. Ein solches Aggregat-Modul weist wie ein Steuermodul 1 einen Steuereingang 2, einen Rückmeldeausgang 3 und einen Hilfssteuereingang 6 auf. Die Steuerausgänge 4 und die Rückmeldeeingänge 5 sind spezifisch auf das zu steuernde Aggregat abgestimmt. Zweckmäßigerweise besitzt das Aggregat-Modul vom Typ "MOTOR" pro Motor-Betriebsstufe einen Steuerausgang 4, der mit einem Motorschütz einer zugehörigen Stufe verbindbar ist. Außerdem besitzt es für jedes zur Überwachung von Motoren geeignete Bauteil einen Rückmeldeeingang 5, also beispielsweise zu jeder Stufe einen Rückmeldeeingang 5 für den Anschluß eines Schütz-Rückmeldekontaktes und einen Rückmeldeeingang 5 für den Anschluß eines Thermopakets zur Motorüberwachung.

Wenn das Aggregat-Modul vom Typ "MOTOR" von einem übergeordneten Steuermodul 1 beispielsweise den Befehl "EIN Stufe 4" erhält, dann wird unmittelbar der zur Stufe 4 gehörende Steuerausgang 4 eingeschaltet, falls die weiteren Steuerinformation und Hilfssteuerinformationen entsprechend dem bei den Steuermodulen 1 beschriebenen Mechanismus den Befehl nicht einschränken.

Der Schütz-Rückmeldekontakt eines Motorschützes meldet immer dann "EIN", wenn der Motorschütz tatsächlich geschaltet hat, andernfalls meldet er "AUS". Das Aggregat-Modul vom Typ "MOTOR" meldet analog zu den Steuermodulen 1 auf seinem Rückmeldeausgang 3 beispielsweise "Betrieb Stufe 2", wenn die Rückmeldung des Motorschützes der Stufe 2 am entsprechenden Rückmeldeeingang 5 anliegt. Damit ist es möglich, daß ein übergeordnetes Steuermodul 1, beispielsweise des Typs "FOLGE", aufgrund dieser Betriebsmeldung ein nächstes Aggregat einschaltet.

Das Thermopaket ist ein Sicherheitselement, das einen Stromkreis bei zu großem Stromfluß unterbricht und gleichzeitig eine Meldung auf einen Rückmeldeeingang 5 gibt. Bei Überstrom meldet es "Ein", im Normalfall "Aus". Sobald das Aggregat-Modul vom Typ "MOTOR" beispielsweise beim Rückmeldeeingang 5 vom Thermopaket der Motorstufe 3 die Meldung "Ein" feststellt, meldet es analog zum Steuermodul 1 auf seinem Rückmeldeausgang 3 "Störung Stufe 3". Damit ist es möglich, daß ein übergeordnetes Steuermodul 1 auf eine solche Störung reagieren kann.

Es ist vorteilhaft, wenn auch bei Aggregat-Modulen in Analogie zu den Steuermodulen 1 durch Parameter bestimmt werden kann, ob die mit den Schütz-Rückmeldekontakten und den Thermopaketen verbundenen Rückmeldeeingänge 5 bereits vom Aggregat-Modul selbst überwacht werden sollen und daraufhin eine Störabschaltung der einzelnen Stufen ausgelöst werden soll.

Wie bereits erwähnt, werden reale Aggregate von betriebstechnischen Anlagen beispielsweise von in Schaltschränken angeordneten Relais und bei Leistungsschaltungen anschließend zusätzlich über Schütze angesteuert. Die Rückmeldungen erfolgen meist ebenfalls durch Relais, die von Öffner- oder Schließ-Kontakten betätigt werden. Um eine Verbindung zwischen den zuvor genannten Steuermodulen 1 bzw. Aggregat-Modulen und den realen Aggregaten der betriebstechnischen Anlage herzustellen, bedarf es einer weiteren Art von Modulen: Schnittstellen-Modulen.

Eine erste Art von Schnittstellen-Modul ist der Typ "BINÄR-OUTPUT". Diese wandeln Signale mit den Werten "Ein" und "Aus", die von Steuermodulen 1 oder Aggregat-Modulen stammen, in binäre Strom- oder Spannungssignale zur Ansteuerung von Relais und/oder Schützen.

Eine zweite Art von Schnittstellen-Modul ist der Typ "BINÄR-INPUT". Diese wandeln umgekehrt binäre Strom- oder Spannungssignale in Signale "Ein" und "Aus", die mit Rückmeldeeingängen von Steuermodulen 1 und/oder Aggregat-Modulen verbunden werden können.

Nachstehend wird anhand eines Beispiels einer zu steuernden Anlage eine aus Steuermodulen 1 gebildete Steuerungseinrichtung geschildert.

Eine zu steuernde Anlage ist in der Fig. 4 dargestellt. Dabei handelt es sich um eine Lüftungsanlage für einen Raum 20, dem mittels eines Zuluft-Ventilators 21 Frischluft zugeführt wird. Zum Transport der Abluft sind ein erster Abluft-Ventilator 22 und ein zweiter Abluft-Ventilator 23 vorhanden, von denen immer nur einer in Betrieb ist. Die Luftleitungen sind mittels einer Zuluft-Klappe 24 und mittels einer Abluft-Klappe 25 gegen die Umgebung verschließbar. Bei den beiden Luftklappen 24 und 25 handelt es sich um sogenannte Brandschutz-Klappen, die eine mechanische Rückstellvorrichtung besitzen.

Eine nachfolgend zu beschreibende Steuerungseinrichtung soll die folgende Betriebsweise der Anlage ermöglichen: Nach einem Einschaltbefehl sollen zuerst gleichzeitig die Zuluft-Klappe 24 und die Abluft-Klappe 25 von der Stellung "Geschlossen" in die Stellung "Offen" gesteuert werden. Sobald die Luftklappen 24 und 25 die "Offen"-Position erreicht haben, soll der Zuluft-Ventilator 21 in Betrieb gesetzt werden. Sobald dieser seine Betriebsmeldung abgibt, soll einer der Abluft-Ventilatoren 22 oder 23 in Betrieb gehen. Ist die gesamte Anlage in Betrieb, soll dies optisch signalisiert werden.

Tritt beim zuvor beschriebenen Anfahrbetrieb eine Störung auf, soll die Anlage abgeschaltet und die Störung optisch signalisiert werden.

Tritt während des Betriebs eine Störung an einem der Anlagen-Aggregate auf, soll ebenfalls eine Abschaltung und Signalisation erfolgen. Eine durch Störung der Abluft-Ventilatoren 22 und 23 verursachte Störabschaltung soll allerdings nur dann erfolgen, wenn beide Abluft-Ventilatoren 22 und 23 gestört sind. Normalerweise ist der erste Abluft-Ventilator 22 in Betrieb. Wird dieser gestört, soll die Steuerungseinrichtung automatisch den zweiten Abluft-Ventilator 23 in Betrieb setzen.

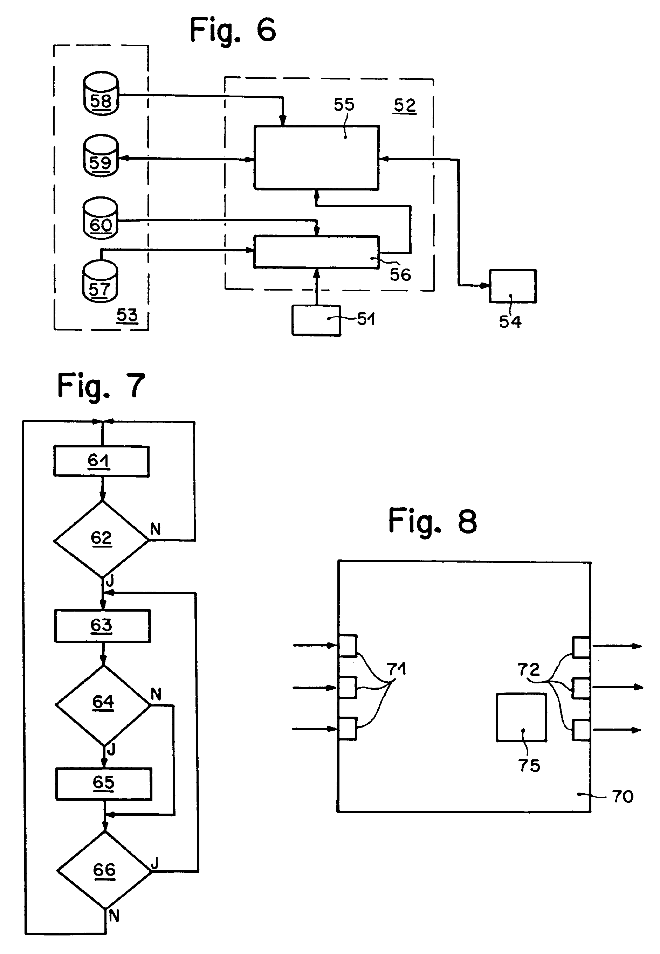

Die Fig. 5 zeigt eine Steuerungseinrichtung 30 zur Steuerung der in der Fig. 4 dargestellten Anlage. An einen ersten Eingang 31 ist ein Anlagenschalter 32 angeschlossen. Innerhalb der Steuerungseinrichtung 30 ist der Eingang 31 mit einem Steuereingang eines ersten Schnittstellen-Moduls 33.1 verbunden. Das Schnittstellen-Modul 33.1 ist vom Typ "BINÄR INPUT". Der Steuerausgang des Schnittstellen-Moduls 33.1 ist mit dem Steuereingang eines ersten Steuermoduls 1.1 verbunden, das vom Typ "FOLGE" ist. Das Steuermodul 1.1 weist drei Steuerausgänge und drei Rückmeldeeingänge auf. Der erste dieser Steuerausgänge ist mit dem Steuereingang eines nachgeordneten Steuermoduls 1.2, der zweite ist mit dem Steuereingang eines ersten nachgeordneten Aggregat-Moduls 34.1 und der dritte ist mit dem Steuereingang eines weiteren Steuermoduls 1.3 verbunden. Die drei Rückmeldeeingänge des Steuermoduls 1.1 sind mit den Rückmeldeausgängen des Steuermoduls 1.2, des Aggregat-Moduls 34.1 und des Steuermoduls 1.3 verbunden. Das Steuermodul 1.2 ist vom Typ "PARALLEL" und das Steuermodul 1.3 vom Typ "RESERVE". Das Aggregat-Modul 34.1 ist vom Typ "MOTOR".

An den ersten Steuerausgang des Steuermoduls 1.2 ist ein Schnittstellen-Modul 33.2 angeschlossen, an dessen Ausgang der Antrieb der Zuluft-Klappe 24 geschaltet ist. Der zweite Steuerausgang des Steuermoduls 1.2 ist mit einem Schnittstellen-Modul 33.3 verbunden, an dessen Ausgang der Antrieb der Abluft-Klappe 25 angeschlossen ist. An den ersten Rückmeldeeingang des Steuermoduls 1.2 ist über ein Schnittstellen-Modul 33.4 ein Hilfskontakt HK24 angeschlossen, der die Stellung der Zuluft-Klappe 24 signalisiert. In gleicher Weise ist an den zweiten Rückmeldeeingang des Steuermoduls 1.2 über ein Schnittstellen-Modul 33.5 ein Hilfskontakt HK25 angeschlossen, der die Stellung der Abluft-Klappe 25 meldet.

An den Steuerausgang des Aggregat-Moduls 34.1 ist über ein Schnittstellen-Modul 33.6 der Motor des Zuluft-Ventilators 21 angeschlossen. Der erste Rückmeldeeingang des Aggregat-Moduls 34.1 ist über ein Schnittstellen-Modul 33.7 mit einem Schütz-Rückmeldekontakt RK21 für den Motor des Zuluft-Ventilators 21 verbunden und an den zweiten Rückmeldeeingang des Aggregat-Moduls 34.1 ist über ein Schnittstellen-Modul 33.8 ein Thermopaket-Kontakt TH21 angeschlossen, das den Motor des Zuluft-Ventilators 21 überwacht.

Das Steuermodul 1.3 weist zwei Steuerausgänge und zwei Rückmeldeeingänge auf. Der erste dieser Steuerausgänge ist mit dem Steuereingang eines nachgeordneten Aggregat-Moduls 34.2 und der zweite ist mit dem Steuereingang eines nachgeordneten Aggregat-Moduls 34.3 verbunden. Die beiden Rückmeldeeingänge des Steuermoduls 1.3 sind mit den Rückmeldeausgängen der Aggregat-Module 34.2 und 34.3 verbunden. Die Aggregat-Module 34.2 und 34.3 sind vom Typ "MOTOR".

An das Aggregat-Modul 34.2 ist an dessen Steuerausgang über ein Schnittstellen-Modul 33.9 der Motor des ersten Abluft-Ventilators 22 angeschlossen. An den ersten Rückmeldeeingang ist über ein Schnittstellen-Modul 33.10 ein Schütz-Rückmeldekontakt RK22 für den Motor des Zuluft-Ventilators 22 und an den zweiten Rückmeldeeingang über ein Schnittstellen-Modul 33.11 ein Thermopaket-Kontakt TH22 angeschlossen, das den Motor des Abluft-Ventilators 22 überwacht.

In gleicher Weise ist der Steuerausgang des Aggregat-Moduls 34.3 über ein Schnittstellen-Modul 33.12 mit dem Motor des zweiten Abluft-Ventilators 23 verbunden. An den ersten Rückmeldeeingang ist über ein Schnittstellen-Modul 33.13 ein Schütz-Rückmeldekontakt RK23 für den Motor des Zuluft-Ventilators 23 und an den zweiten Rückmeldeeingang über ein Schnittstellen-Modul 33.14 ein Thermopaket-Kontakt TH23 angeschlossen, das den Motor des Abluft-Ventilators 23 überwacht.

Die zuvor genannten beiden Rückmeldeeingänge der Aggregat-Module 34.1, 34.2 und 34.3 müssen nicht als separate Eingänge aufgefaßt werden. Die am ersten Rückmeldeeingang anliegenden Signale, die von den Schütz-Rückmeldekontakten RK21 bzw. RK22 bzw. RK23 stammen, sind Betriebsmeldungen, während die am zweiten Rückmeldeeingang anliegenden Signale, die von den Thermopaket-Kontakten TH21 bzw. TH22 bzw. TH23 stammen, Störungsmeldungen sind. Beide zusammen bilden die Rückmeldeinformationen, die gemeinsam auf einen Rückmeldeeingang gegeben werden können.

An den Rückmeldeausgang des Steuermoduls 1.1 sind zwei weitere Schnittstellen-Module 33.15 und 33.16 angeschlossen. Das Schnittstellen-Modul 33.15 übernimmt von diesem Rückmeldeausgang lediglich das "Betrieb"-Signal und wandelt es in eine Spannung für eine Betriebsmeldelampe 35, die an den Ausgang des Schnittstellen-Moduls 33.15 angeschlossen ist. Das Schnittstellen-Modul 33.16 übernimmt vom Rückmeldeausgang des Steuermoduls 1.1 nur das "Störung"-Signal und wandelt es in eine Spannung für eine Störungsmeldelampe 36, die mit dem Ausgang des Schnittstellen-Moduls 33.16 verbunden ist.

Bevor der Steuerungsablauf bei Inbetriebsetzung und die Verarbeitung von Störungen beschrieben wird, soll zunächst darauf eingegangen werden, was bei der Wahl der Parameter bei den einzelnen Steuermodulen 1 zu berücksichtigen ist.

Um bei Störungsmeldungen von angeschlossenen Modulen eine Störabschaltung zu erreichen, werden beim Steuermodul 1.1 die Paramter "Störungsüberwachung" und "Störabschaltung" auf "EIN" gesetzt.

Damit das Steuermodul 1.2 an das Steuermodul 1.1 eine Störung meldet, wenn einer der Hilfskontakte HK24 oder HK25 kein Signal liefert, obwohl die Zuluft-Klappe 24 und die Abluft-Klappe 25 angesteuert worden sind, wird beim Steuermodul 1.2 der Parameter "Betriebsüberwachung" auf "EIN" gesetzt. Außerdem muß beim Parameter "Rückmeldezeit" für beide Rückmeldeeingänge die Zeit eingestellt werden, die die Klappen 24 und 25 benötigen, um von der geschlossenen Position in die Position "voll geöffnet" zu laufen. Angenommen, die Laufzeit beider Klappen 24 und 25 betrage 50 Sekunden. Unter Berücksichtigung einer Sicherheitszeit von 10 Sekunden sollte in diesem Fall die Rückmeldezeit auf eine Minute eingestellt werden.

Nachfolgend wird der Inbetriebsetzungsvorgang der Anlage beschrieben, sobald der Anlagenschalter 32 betätigt wird. Das Schnittstellen-Modul 33.1 erkennt das Schließen des Anlagenschalters 32 und erzeugt an seinem Ausgang ein Signal. Dieses Signal gelangt an den Eingang des Steuermoduls 1.1 und zwar an die Signalleitung für die Befehlsinformation "Befehl". Dieses Signal hat die Bedeutung "Ein". Stufenbetrieb ist bei dieser Anlage nicht vorgesehen.

Entsprechend der Funktion des Steuermoduls 1.1, das vom Typ "FOLGE" ist, wird von diesem zuerst an seinem ersten Steuerausgang ein Befehl "Ein" generiert. Dieser Befehl gelangt auf den Steuereingang des Steuermoduls 1.2. Das Steuermodul 1.2 erzeugt nun gleichzeitig Befehle "Ein" für seine beiden Steuerausgänge, so daß die Schnittstellen-Module 33.2 und 33.3 diese "Ein"-Befehle erhalten. Dadurch werden die Zuluft-Klappe 24 und die Abluft-Klappe 25 angesteuert und beginnen, von der Position "geschlossen" in die Position "offen" zu laufen.

Gleichzeitig mit der Ausgabe der Befehle "Ein" startet beim Steuermodul 1.2 die interne Zeitmessung. 50

EP 0 503 255 B1

Sekunden nach Ausgabe des Befehls "Ein" sind die Zuluft-Klappe 24 und die Abluft-Klappe 25 in die Position "offen" gelaufen, was durch die Hilfskontakte HK24 und HK25 über die Schnittstellen-Module 33.4 bzw. 33.5 an die Rückmeldeeingänge des Steuermoduls 1.2 gemeldet wird. Die Klappen 24 und 25 melden also "Betrieb". Nach Ablauf der Rückmeldezeit von einer Minute liegen also beide "Betrieb"-Signale vor, so daß das Steuermodul 1.2 über seinen Rückmeldeausgang "Betrieb" an den ersten Rückmeldeeingang des Steuermoduls 1.1 meldet.

Durch diese "Betrieb"-Meldung erzeugt nun das Steuermodul 1.1 an seinem zweiten Steuerausgang den Befehl "Ein", so daß jetzt das Aggregat-Modul 34.1 diesen "Ein"-Befehl erhält. Das Aggregat-Modul 34.1 erzeugt daraus einen "Ein"-Befehl für das Schnittstellen-Modul 33.6 und dadurch wird der Schütz des Zuluft-Ventilators 21 erregt, was zum Anlaufen des Zuluft-Ventilators 21 führt. Das Schütz meldet durch seinen Rückmeldekontakt RK21, daß das Schütz angezogen hat. Diese Meldung des Rückmeldekontakts RK21 erscheint als Signal "Betrieb" über das Schnittstellen-Modul 33.7 am ersten Rückmeldeeingang des Aggregat-Moduls 34.1. Daraufhin erzeugt das Aggregat-Modul 34.1 an seinem Rückmeldeausgang ein Signal "Betrieb", das auf den zweiten Rückmeldeeingang des Steuermoduls 1.1 gelangt.

Aufgrund dieser Betriebsmeldung generiert nun das Steuermodul 1.1 an seinem dritten Steuerausgang einen Befehl "Ein", der auf den Steuereingang des Steuermoduls 1.3 gelangt. Es sei angenommen, daß das Steuermodul 1.3 von keinem der angeschlossenen Aggregat-Module 34.2 und 34.3 eine Störung signalisiert erhält. Deshalb generiert nun das Steuermodul 1.3 einen Befehl "Ein" für sein Führungselement, für das Aggregat-Modul 34.2. Das Aggregat-Modul 34.2 erzeugt nun in der gleichen Weise, wie zuvor beim Aggregat-Modul 34.1 beschrieben, einen Befehl "Ein", der zum Schalten des Schützes des Abluft-Ventilators 22 führt.

Der Schütz-Rückmeldekontakt RK22 meldet den Betrieb über das Schnittstellen-Modul 33.10 an das Aggregat-Modul 34.2 zurück, das nun seinerseits ein Signal "Betrieb" an seinem Rückmeldeausgang erzeugt, das auch am Rückmeldeeingang des Steuermoduls 1.3 auftritt. Das Steuermodul 1.3 generiert aufgrund dieser Rückmeldung ein Signal "Betrieb" an seinem Rückmeldeausgang. Dieses erscheint folglich am dritten Rückmeldeeingang des Steuermoduls 1.1.

Da nun an allen drei Rückmeldeeingängen des Steuermoduls 1.1 ein Signal "Betrieb" anliegt, erzeugt das Steuermodul 1.1 an seinem Rückmeldeausgang ebenfalls ein Signal "Betrieb". Über das Schnittstellen-Modul 33.15 wird somit die Betriebsmeldelampe 35 eingeschaltet.

Nachfolgend wird beschrieben, wie sich die Steuerungseinrichtung 30 verhält, wenn bei der Inbetriebsetzung oder während des Betriebs Störungen an den Elementen der Anlage auftreten.

Zunächst wird die Funktion der Steuerungseinrichtung 30 geschildert, wenn beim Anfahrvorgang die Abluft-Klappe 25 nicht öffnet.

Der Inbetriebsetzungsvorgang verläuft zunächst wie zuvor beschrieben. Innerhalb der Rückmeldezeit von einer Minute erscheint jedoch kein Signal des Hilfskontakts HK25 der Abluft-Klappe 25. Nach Ablauf der Rückmeldezeit generiert das Steuermodul 1.2 ein Signal "Störung", das vom Rückmeldeausgang des Steuermoduls 1.2 auf den ersten Rückmeldeeingang des Steuermoduls 1.1 gelangt. Das Steuermodul 1.1 erzeugt nun seinerseits an seinem Rückmeldeausgang ein Signal "Störung". Dieses "Störung"-Signal gelangt an das Schnittstellen-Modul 33.16 und durch dieses wird die Störungsmeldelampe 36 eingeschaltet.

Da beim Steuermodul 1.1 der Parameter "Störabschaltung" auf "Ein" gesetzt ist, generiert nun das Steuermodul 1.1 Befehle "Aus" für seine Steuerausgänge. Der erste Steuerausgang des Steuermoduls 1.1, der bisher den Befehl "Ein" führte, wird nun auf "Aus" gesetzt. Dadurch werden Befehle "Aus" für die Zuluft-Klappe 24 und für die Abluft-Klappe 25 erzeugt. Die Anlage ist somit abgeschaltet.

Als weiterer möglicher Störfall wird nachfolgend beschrieben, wie die Steuerungseinrichtung 30 bei einer Störung des Zuluft-Ventilators 21 während des Betriebs reagiert.

Die Anlage sei wie zuvor beschrieben eingeschaltet worden und stehe in Betrieb, was durch das Brennen der Betriebsmeldelampe 35 angezeigt wird.

Aufgrund eines Defekts beim Motor des Zuluft-Ventilators 21 spreche nun infolge Überstroms der Thermopaket-Kontakt TH21 an. Über das Schnittstellen-Modul 33.8 wird das Ansprechen des Thermopaket-Kontakts TH21 als Rückmeldung "Störung" an den zweiten Rückmeldeeingang des Aggregat-Moduls 34.1 gemeldet. Der Rückmeldeausgang des Aggregat-Moduls 34.1 führt demzufolge auch ein Signal "Störung", das an den zweiten Rückmeldeeingang des Steuermoduls 1.1 übergeben wird. Auch das Steuermodul 1.1 erzeugt daraufhin an seinem Rückmeldeausgang ein Signal "Störung" und dieses Signal wird vom Schnittstellen-Modul 33.16 so umgesetzt, daß die Störungsmeldelampe 36 brennt.

Da am Steuermodul 1.1 der Parameter "Störabschaltung" auf "Ein" gesetzt ist, veranlaßt das Steuermodul 1.1 in der Folge das Ausschalten der Anlage. Dabei wird die im Steuermodul 1.1 durch Parameter festgelegte Folge für das Abschalten eingehalten. Zuerst wird der Befehl am dritten Steuerausgang des Steuermoduls 1.1 auf "Aus" gesetzt. Das Steuermodul 1.3 erhält diesen "Aus"-Befehl und generiert einen "Aus"-Befehl für das zuvor eingeschaltete Aggregat-Modul 34.2. Dadurch wird über das Schnittstellen-Modul 33.9 der Abluft-Ven-

11

tilator 22 abgeschaltet. Sobald der Schütz-Rückmeldekontakt RK22 über das Schnittstellen-Modul 33.10 "Aus" meldet, generiert das Aggregat-Modul 34.2 eine Rückmeldung "Aus" und übergibt sie an das Steuermodul 1.3. Dieses erzeugt wiederum eine Rückmeldung "Aus", die dem Steuermodul 1.1 übergeben wird.

Daraufhin schaltet das Steuermodul 1.1 durch einen "Aus"-Befehl an seinem zweiten Steuerausgang das Aggregat-Modul 34.1 auf "Aus", wodurch schließlich der Schütz des Zuluft-Ventilators 21 analog zur vorangehenden Beschreibung abgeschaltet wird. Durch den Abfall des Schütz-Rückmeldekontakts RK21 wird folglich dem zweiten Rückmeldeeingang des Steuermoduls 1.1 gemeldet, daß der Betrieb "Aus" ist.

Anschließend werden nun in analoger Weise die beiden Klappen 24 und 25 abgeschaltet, so daß sie selbsttätig in die Schließstellung laufen. Sobald an allen drei Rückmeldeeingängen des Steuermoduls 1.1 die Meldung Betrieb "Aus" ansteht, entsteht am Rückmeldeausgang des Steuermoduls 1.1 die Betriebsmeldung "Aus", so daß in der Folge die Betriebsmeldelampe 35 erlischt.

Solange die Steuerungseinrichtung 30 die Störungsmeldung des Thermopaket-Kontakts TH21 erhält, bleibt die Anlage trotz eingeschaltetem Anlagenschalter 32 abgeschaltet. Ein Betreuer der Anlage wird durch die Störungsmeldelampe 36 auf die Störung aufmerksam gemacht. Er kann nun die Störung beheben und das Thermopaket entriegeln, so daß dessen Thermopaket-Kontakt TH21 keine Störung mehr meldet. Mit dem Wegfallen der Störungsmeldung entfällt beim Steuermodul 1.1 die Reaktion "Störabschaltung" und die Anlage schaltet wieder normal wie zuvor beschrieben ein.

Nachfolgend wird beschrieben, wie die Steuerungseinrichtung 30 bei einer Störung des in Betrieb befindlichen ersten Abluft-Ventilators 22 reagiert.

Ausgehend vom normalen Betrieb der Anlage trete zu einem bestimmten Zeitpunkt ein Defekt am im Betrieb befindlichen Abluft-Ventilator 22 auf, der durch das Ansprechen des Thermopaket-Kontaktes TH22 signalisiert wird. Über das Schnittstellen-Modul 33.11 wird diese Störung an Aggregat-Modul 34.2 und von diesem an das Steuermodul 1.3 gemeldet. Das Steuermodul 1.3 reagiert auf diese Störungsmeldung nun in der Weise, daß es den Steuerbefehl am ersten Steuerausgang auf "Aus" setzt, wodurch der Abluft-Ventilator 22 abgeschaltet wird. Gleichzeitig setzt es den Steuerbefehl am zweiten Steuerausgang auf "Ein". Dadurch erhält das Aggregat-Modul 34.3 den Befehl "Ein" und dadurch wird der zweite Abluft-Ventilator 23 eingeschaltet.

Das Steuermodul 1.3, das die Störung des ersten Abluft-Ventilators 22 erkennt, meldet die Störung nicht an das übergeordnete Steuermodul 1.1 weiter, da keine die Gesamtfunktion der Anlage beeinträchtigende Störung vorliegt, denn die Funktion des ersten Abluft-Ventilators 22 wurde durch den zweiten Abluft-Ventilator 23 übernommen. Erst wenn auch dieser zweite Abluft-Ventilator 23 gestört sein solte, würde die Störung vom Steuermodul 1.3 an das Steuermodul 1.1 weitergemeldet, was eine Abschaltung der gesamten Anlage nach sich zöge.

Dadurch, daß mittels Parametern der Parameter-Sätze 16 jedes Steuermoduls 1 jeder Hierarchie-Stufe bestimmt werden kann, ob und wie innerhalb eines Steuermoduls 1 auf die Rückmeldeinformationen reagiert wird, besteht die Möglichkeit, daß Ereignisse bei hierarchisch auf einer bestimmten Ebene liegenden Elementen von dem direkt darüber liegenden Steuermodul 1 und/oder hierarchisch weiter oben liegenden Steuermodulen 1 im Hinblick auf Steuerabläufe mit einbezogen werden können.

Durch sehr einfach vornehmbare Änderung der Parameter eines Steuermoduls 1 ist es möglich, das Funktionsverhalten einer Steuerungseinrichtung 30 beim Auftreten von Störungen zu verändern. Ist beispielsweise gewünscht, daß bei einer Störung in der zuvor beschriebenen Anlage nur die gestörten Anlagenteile abgeschaltet werden, während nicht gestörte Anlagenteile weiterlaufen, und daß anstelle einer Störabschaltung nur eine Störung mittels der Störungsmeldelampe 36 signalisiert wird, so läßt sich dieses Verhalten in einfacher Weise dadurch erreichen, daß beim Steuermodul 1.1 der Parameter "Störabschaltung" auf "Aus", beim Steuermodul 1.2 auf "Ein" und beim Aggregat-Modul 34.1 und beim Steuermodul 1.3 die Parameter "Störungsüberwachung" und "Störabschaltung" auf "Ein" gesetzt werden. Das ist gegenüber dem Stand der Technik ein besonders großer Vorteil, denn beim Stand der Technik wären in einem solchen Fall aufwendige Verdrahtungsänderungen an den Rückmelde- und Verriegelungsketten erforderlich.

Für die körperliche Realisierung einer die vorgenannten Steuermodule 1 enthaltenden Steuerungseinrichtung 30 gibt es verschiedene Möglichkeiten. So kann die in den Steuermodulen 1 enthaltene Logik mittels diskreter Logikschaltungen verwirklicht sein. Jedes Steuermodul 1, jedes Schnittstellen-Modul 33 und jedes Aggregat-Modul 34 kann mit anderen Modulen direkt verdrahtet sein. Es ist vorteilhaft, wenn dazu jedes Modul auf einer Steckkarte angeordnet ist. Die Verdrahtung der einzelnen Steckkarten ist dann einfach und übersichtlich.

Es ist aber auch möglich, jedes Steuermodul 1 durch eine Mikroprozessor-Steuerung zu realisieren, bei der die Funktionalität der internen Befehls- und Signalverarbeitung durch Programmcode verwirklicht ist.

Eine weitere Realisation in Form eines programmierbaren Steuergeräts mit Mikroprozessor ist nachfolgend anhand der Fig. 6 bis 10 beschrieben.

In der Fig. 6 bedeutet 51 einen Mikroprozessor. Mit 52 ist ein Programmspeicher, mit 53 ein Datenspeicher und mit 54 eine Schnittstellen-Baugruppe von und zu einer zu steuernden Anlage bezeichnet. Schnittstellen-Baugruppen 54 sind in der Regel mehrfach vorhanden.

Der Programmspeicher 52 beinhaltet nicht ein festes, ausführbares Programm, sondern enthält eine Funktionsblock-Bibliothek 55 und ein Ablauf-Steuerprogramm 56. Die Funktionsblock-Bibliothek 55 ist eine Menge fix programmierter, voneinander unabhängiger, jedoch aufeinander abgestimmter und miteinander verknüpfbarer Funktionsblöcke. Jeder Funktionsblock besteht aus einer bestimmten Folge von Programmanweisungen.

Fix programmiert bedeutet, daß jeder Funktionsblock aus einer in einem Festwertspeicher des Programmspeichers 52 vorliegenden Folge von Programmanweisungen in Maschinensprache besteht, die vom Mikroprozessor 51 ausführbar ist. Mit dem Terminus "voneinander unabhängig" ist gemeint, daß jeder Funktionsblock eine in sich geschlossene Einheit bildet, daß also keine gegenseitigen Beeinflussungen oder Aufrufe von Funktionsblöcken untereinander erfolgen. Die Funktionsblöcke sind aber aufeinander abgestimmt, was bedeutet, daß die einzelnen Funktionsblöcke quasi normierte Ein- und Ausgänge besitzen, so daß sich Funktionsblöcke miteinander verbinden lassen. Verbinden bedeutet, daß beispielsweise ein Ausgang eines Funktionsblocks an einen Eingang eines anderen Funktionsblocks Daten übergeben kann. Daten ist hier in weitgefaßtem Sinne zu verstehen: Es kann sich um Daten im engeren Sinne, aber auch um Befehle und Meldungen handeln.

Der Datenspeicher 53 enthält mehrere Arten von Daten. Eine erste Art von Daten bilden Verknüpfungsinformationen 57. Die Verknüpfungsinformationen 57 enthalten Informationen darüber, welche Funktionsblöcke aus der Funktionsblock-Bibliothek 55 benutzt werden und wie diese Funktionsblöcke miteinander zu verknüpfen sind. Jeder einzelne Datensatz der Verknüpfungsinformationen 57 besteht aus Angaben der jeweils beteiligten Funktionsblöcke und einer Kennzeichnung von verwendeten Ein- und Ausgängen der Funktionsblöcke und zugehöriger Parameter, was nachfolgend beschrieben wird.

Eine zweite Art von Daten bilden Funktionsblock-Parameter 58. Zu jedem der verschiedenen Funktionsblöcke der Funktionsblock-Bibliothek 55 gehört ein Satz Funktionsblock-Parameter 58, die das effektive Verhalten und den Funktionsumfang eines Funktionsblocks definieren. Die Gesamtheit der Funktionsblock-Parameter 58 besteht aus einzelnen, den Funktionsblöcken zugehörigen Datensätzen, deren jeder aus einer Kennzeichnung der Art des Parameters, des Datentyps und der Zugriffsart besteht. Mit Art des Parameters ist dabei gemeint, ob es sich beispielsweise um einen Eingang oder einen Ausgang handelt. Im Datentyp ist festgelegt, ob es sich zum Beispiel um einen reellen Wert oder eine logische Größe handelt, und mit der Zugriffsart ist festgelegt, ob Daten nur lesbar oder lesbar und schreibbar sind.

Eine dritte Art von Daten sind Prozeßdaten 59. Dies sind einerseits Ein- und Ausgabedaten der Funktionsblöcke, andererseits Daten für die zu steuernde Anlage bzw. aus der zu steuernden Anlage, die über Schnittstellen-Baugruppen 54 ausgegeben oder eingelesen werden. Die Prozeßdaten 59 bestehen ihrerseits aus einzelnen Daten, die beispielsweise durch einen Datennamen identifizierbar sind. Daten aus der zu steuernden Anlage werden mit Hilfe von speziellen Funktionsblöcken von der Anlage in den Datenspeicher 53 transferiert, was später noch beschrieben wird.

Vorteilhaft kann auch eine vierte Art von Daten vorhanden sein, nämlich Ablaufinformationen 60. Diese steuern, was später noch beschrieben wird, das Ablauf-Steuerprogramm 56. Linien zwischen den Elementen der Fig. 6 bedeuten Datenflüsse.

Ein Beispiel für das Ablauf-Steuerprogramm 56 ist in der Fig. 7 schematisch wiedergegeben. Mit 61 ist ein erster Aktionsblock bezeichnet, dessen Funktion "Warten auf Taktzyklus" lautet. Diesem nachgeordnet ist ein erster Entscheidungsblock 62, dessen Reaktion davon abhängt, ob eine Verknüpfungsinformation 57 vorliegt. Ist eine solche Verknüpfungsinformation 57 vorhanden, wird der Ablauf mit einem nachfolgenden zweiten Aktionsblock 63 weitergeführt, dessen Tätigkeit "Lesen der folgenden Verknüpfungsinformation 57" lautet. Ist dagegen keine weitere Verknüpfungsinformation 57 vorhanden, was beispielsweise durch ein "END OF DATA"-Signal im Satz der Verknüpfungsinformationen 57 markiert ist, so wird an den Eingang des ersten Aktionsblocks 61 zurückgesprungen und somit auf den nächsten Taktzyklus gewartet.

Nach der Ausführung der Aktion des Aktionsblocks 63, dem Lesen der folgenden Verknüpfungsinformation 57, folgt ein zweiter Entscheidungsblock 64, in dem beispielsweise anhand der vorliegenden Verknüpfungsinformation 57 entschieden wird, ob ein nächster Funktionsblock der Funktionsblock-Bibliothek 55 aufgerufen werden muß. Als Entscheidungskriterium für die Notwendigkeit des Aufrufs eines Funktionsblocks kann vorteilhaft auch herangezogen werden, ob Prozeßdaten, die von einem Funktionsblock berücksichtigt werden, geändert haben. Haben solche Prozeßdaten nicht geändert, kann auf den Aufruf des Funktionsblocks verzichtet werden. Dadurch läßt sich die Zykluszeit verkürzen, was das Zeitverhalten der Steuerungseinrichtung verbessert. Muß ein nächster Funktionsblock aufgerufen werden, so folgt anschließend ein dritter Aktionsblock 65. Die Aktion des Aktionsblocks 65 besteht im Aufrufen des in der zuvor bearbeiteten Verknüpfungsinformation 57 angegebenen Funktionsblocks der Funktionsblock-Bibliothek 55 und in der Übergabe der Parameter

EP 0 503 255 B1

an diesen Funktionsblock.

Anschließend an die Abarbeitung des Aktionsblocks 65 wird ein dritter Entscheidungsblock 66 abgearbeitet. Dies geschieht auch dann, wenn beim Entscheidungsblock 64 festgestellt wurde, daß kein Funktionsblock der Funktionsblock-Bibliothek 55 aufgerufen werden muß. Im Entscheidungsblock 66 wird ermittelt, ob noch ein Funktionblock der Funktionsblock-Bibliothek 55 abgearbeitet werden muß. Muß kein weiterer Funktionsblock abgearbeitet werden, was beispielsweise wiederum durch ein "END OF DATA"-Signal gekennzeichnet sein kann, so erfolgt ein Sprung zurück zum Eingang des Aktionsblocks 61. Muß jedoch ein weiterer Funktionsblock abgearbeitet werden, so erfolgt ein Sprung zurück zum Eingang des Aktionsblocks 63.

Die Fig. 8 zeigt ein Schema eines Funktionsblocks 70 in allgemeiner Form. Jeder Funktionsblock 70 besitzt Eingänge 71 und Ausgänge 72. Ein Eingang 71 eines Funktionsblocks 70 kann mit einem Ausgang 72 eines anderen Funktionsblocks 70 und ein Ausgang 72 mit einem Eingang 71 eines anderen Funktionsblocks 70 verbunden werden. Auch Mehrfach-Verbindungen sind möglich, so daß ein Ausgang 72 eines Funktionsblocks 70 mit je einem Eingang 71 anderer Funktionsblöcke 70 verbunden werden kann. Die Verbindungen sind jedoch nur statthaft und möglich, wenn der Ausgang 72 des einen Funktionsblocks 70 und der Eingang des anderen Funktionsblocks 70 hinsichtlich der verwendeten Datentypen und Datenstruktur übereinstimmen. Jeder Funktionsblock 70 besitzt in der Regel außerdem mindestens einen Parameter-Satz 75, mit dem das Verhalten des Funktionsblocks 70 beeinflußt werden kann. Der Parameter-Satz 75 wird durch Übergabe eines Parametersatzes der Funktionblock-Parameter 58 aktualisiert. Die Übergabe eines Parameter-Satzes 75 an den Funktionsblock erfolgt, wie zuvor schon erwähnt, durch die Ablaufsteuerung 56. Der Parameter-Satz 75 kann aber auch schon vorbestimmte Werte, sogenannte Default-Werte, enthalten. Diese können durch einen Parametersatz der Funktionsblock-Parameter 58 überschrieben werden.

Für verschiedene Aufgaben im Zusammenhang mit einer Steuerung enthält die Funktionsblock-Bibliothek 55 verschiedene Funktionsblöcke 70, die beispielsweise anhand eines Funktionsblock-Namens unterschieden werden können. Nachfolgend sind zunächst einige dieser Funktionsblöcke 70 aufzählend mit möglichen Funktionsblock-Namen genannt und im einzelnen erläutert.

Ein erster Typ eines Funktionsblocks 70 ist der Typ "ANALOG INPUT". Er dient der Weitergabe eines Signals eines analogen Meßwert-Aufnehmers an das gesamte Steuersystem. Ein solcher Funktionsblock 70 wird eingangsseitig mit einer Schnittstellen-Baugruppe 54 verknüpft. Der Funktionsblock 70 des Typs "ANALOG INPUT" veranlaßt auch, daß der Wert der Prozeßgröße in den Datensatz der Prozeßdaten 59 geschrieben wird.

Ein zweiter Typ eines Funktionsblocks 70 ist der Typ "STETIG ZWEIPUNKT". Er dient der Umwandlung eines stetigen Signals eines Funktionsblocks 70 vom Typ "ANALOG INPUT" in ein Zweipunkt-Signal. Der Wert des abgegebenen Zweipunkt-Signals hängt dabei vom stetigen Signal an seinem Eingang und den im Parameter-Satz 75 festgelegten Grenzwerten ab.

Ein dritter Typ eines Funktionsblocks 70 ist der Typ "ZEITSCHALTPROGRAMM". Er dient dazu, bestimmte Vorgänge im Steuersystem zeitabhängig zu machen. Zu seinem Parameter-Satz 75 gehören dabei beispielsweise EIN- und AUS-Schalt-Zeitpunkte.

Ein vierter Typ eines Funktionsblocks 70 ist der Typ "AUSWAHL". Er kann in Abhängigkeit von seinem Parameter-Satz 75 unterschiedliche Funktionen ausüben. So kann er beispielsweise aus N an seinen Eingängen anliegenden Signalen das kleinste oder das größte auswählen oder aus den Signalen den Mittelwert bilden. Er ist zur Verarbeitung stetiger oder stufiger Signale geeignet.

Ein fünfter Typ eines Funktionsblocks 70 ist der Typ "FOLGE". Er kann, wiederum in Abhängigkeit von seinem Parameter-Satz 75 an seinen Ausgängen Signale in bestimmter zeitlicher Folge entstehen lassen. So kann beispielsweise zuerst an einem ersten Ausgang 72 zu einem nachgeordneten Funktionsblock 70 ein Signal entstehen und danach auch an einem zweiten Ausgang 72 zu einem nachgeordneten Funktionsblock 70. Es sind beispielsweise sechs Ausgänge 72 zu nachgeordneten Funktionsblöcken 70 vorhanden, wobei die Zahl der effektiv genutzten Ausgänge 72 durch den Parameter-Satz 75 bestimmt wird. Auch die Reihenfolge der Ansteuerung der verschiedenen Ausgänge 72 ist durch den Parameter-Satz 75 bestimmt.

Ein sechster Typ eines Funktionsblocks 70 ist der Typ "MOTOR". Er dient beispielsweise der Ansteuerung einer Schnittstellen-Baugruppe 54, an die ein Motor angeschlossen ist. Vom Funktionsblock-Typ "MOTOR" können auch der Motorüberwachung dienende Elemente, die ebenfalls über eine Schnittstellen-Baugruppe 54 angeschlossen werden, abgefragt werden.

Ein siebenter Typ eines Funktionsblocks 70 ist der Typ "BEFEHLSAUSGABE". Er dient der Umsetzung eines Logiksignals in einen Befehl für eine Schnittstellen-Baugruppe 54. Deshalb wird ein Funktionsblock 70 dieses Typs ausgangsseitig immer mit einer Schnittstellen-Baugruppe 54 verknüpft.

Ein achter Typ eines Funktionsblocks 70 ist der Typ "BINÄR INPUT". Er dient der Weitergabe eines Signals eines über eine Schnittstellen-Baugruppe 54 angeschlossenen Überwachungsgeräts an das gesamte Steuersystem.

Nachfolgend wird als Beispiel die Arbeitsweise des Funktionsblocks Typ "STETIG ZWEIPUNKT" beschrieben. Er dient beispielsweise als Zweipunktschalter mit zwei Stellungen I und II der Umwandlung eines stetigen Signals eines Funktionsblocks vom Typ "ANALOG INPUT" in ein Zweipunkt-Signal. Der Wert des abgegebenen Zweipunkt-Signals hängt dabei vom stetigen Signal an seinem Eingang und den im Parameter-Satz 75 festgelegten Grenzwerten ab. Im Parameter-Satz 75 ist ein unterer Grenzwert $W_U$ und ein oberer Grenzwert $W_O$ festgelegt.

Durch einen Parameter für diesen Funktionsblock läßt sich vorteilhaft das Schaltverhalten beeinflussen. So wird mittels eines Parameters festgelegt, ob die Stellung I dem EIN- oder dem AUS-Zustand und die Stellung II dem AUS- oder dem EIN-Zustand entspricht. Der gleiche Funktionsblock kann somit für unterschiedliche Aufgaben verwendet werden. So kann damit ein Heizbetrieb gesteuert werden, bei dem die Heizung eingeschaltet werden soll, wenn der Istwert unter dem unteren Grenzwert $W_U$ liegt, und eingeschaltet bleiben soll, bis der Istwert über den oberen Grenzwert $W_O$ steigt. Der gleiche Funktionsblock kann, mit anders gesetztem Parameter, auch zum Kühlbetrieb verwendet werden, bei dem die Kühlung ausgeschaltet werden soll, wenn der Istwert unter den unteren Grenzwert $W_U$ liegt, und ausgeschaltet bleiben soll, bis der Istwert über den oberen Grenzwert $W_O$ steigt.

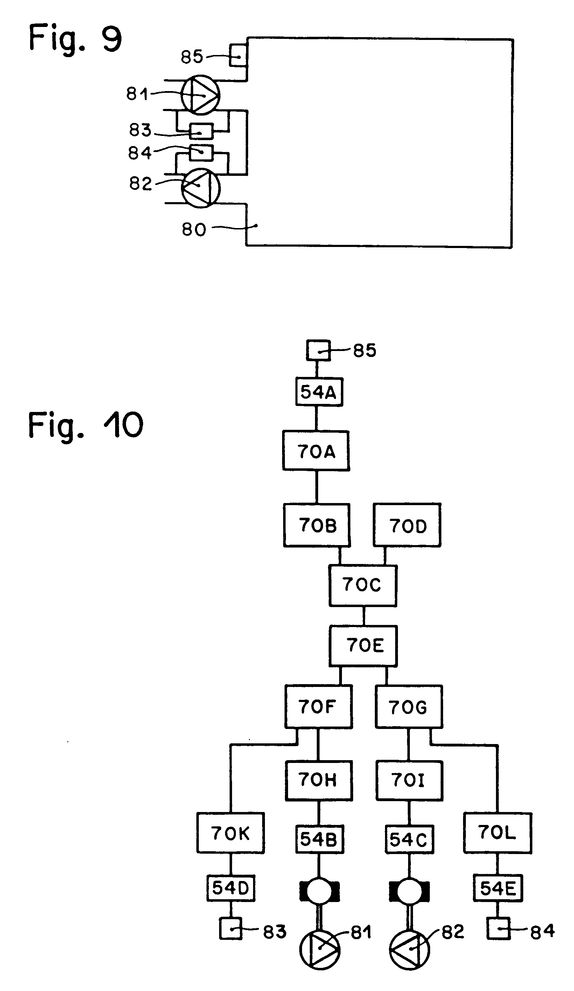

Die Fig. 9 zeigt ein Schema einer einfachen Anlage, die durch eine erfindungsgemäße Steuerungseinrichtung gesteuert werden kann. Einem Raum 80 soll mittels eines Zuluft-Ventilators 81 Frischluft zugeführt werden und aus dem Raum 80 soll mittels eines Abluft-Ventilators 82 abgeführt werden. Jeder der Ventilatoren 81, 82 wird durch einen Strömungswächter überwacht: der Zuluft-Ventilator 81 durch einen ersten Strömungswächter 83 und der Abluft-Ventilator durch einen Strömungswächter 84. Die beiden Ventilatoren 81, 82 sollen gemäß einem Zeitschaltprogramm gesteuert werden. Zusätzlich sollen die Ventilatoren 81, 82 ausgeschaltet werden, wenn die mittels eines Außentemperaturfühlers 85 gemessene Außentemperatur unter 0 Grad Celsius fällt, und wieder eingeschaltet werden, wenn die Außentemperatur über 5 Grad Celsius steigt.

Für die Steuerung dieser Anlage ist ein Funktionsblock-Schema nach der Fig. 10 erforderlich. Dieses Funktionsblock-Schema zeigt die Beziehungen zwischen verschiedenen Funktionsblöcken aus der Funktionsblock-Bibliothek 55. Die in Form von Strichen zwischen den verschiedenen Funktionsblöcken 70A bis 70I gezeichneten Relationen sind keine hardwaremäßigen Verdrahtungen, sondern es handelt sich dabei um Verknüpfungen, die in Form von Verknüpfungsinformationen 57 im Datenspeicher 53 abgelegt sind.

An den ersten Funktionsblock 70A ist eingangsseitig über eine Schnittstellen-Baugruppe 54A der Außentemperaturfühler 85 angeschlossen. Der Funktionsblock 70H ist ausgangsseitig an eine Schnittstellen-Baugruppe 54B angeschlossen, an die der Motor des Zuluft-Ventilators 81 elektrisch verdrahtet ist. In gleicher Weise ist der Abluft-Ventilator 82 an eine Schnittstellen-Baugruppe 54C elektrisch angeschlossen, deren Eingang mit einem Ausgang des Funktionsblocks 70I verknüpft ist. Analog dazu sind die Strömungswächter 83 und 84 über Schnittstellen-Baugruppen 54D bzw. 54E an die Funktionsblöcke 70K bzw. 70L angeschlossen.

Die nachfolgende Liste gibt an, von welchem Typ die einzelnen Funktionsblöcke 70 sind:

| Funktionsblock | Typ |
|---|---|
| 70A | ANALOG INPUT |
| 70B | STETIG ZWEIPUNKT |
| 70C | AUSWAHL |
| 70D | ZEITSCHALTPROGRAMM |
| 70E | FOLGE |
| 70F | MOTOR |
| 70G | MOTOR |
| 70H | BEFEHLSAUSGABE |
| 70I | BEFEHLSAUSGABE |
| 70K | BINÄR INPUT |
| 70L | BINÄR INPUT |

Die Funktionsblöcke 70F und 70G sind nicht unterschiedliche Funktionsblöcke, sondern stellen je einen Aufruf des Funktionsblocks vom Typ "MOTOR" dar. Es handelt sich also um ein und denselben Funktionsblock der Funktionsblock-Bibliothek 55. In gleicher Weise sind auch die Funktionsblöcke 70H und 70I nicht unterschiedliche Funktionsblöcke, sondern jeweils Aufrufe des Funktionsblocks vom Typ "BEFEHLSAUSGABE" und die Funktionsblöcke 70K und 70L jeweils Aufrufe des Funktionsblocks vom Typ "BINÄR INPUT".

Hiernach folgt nun die Beschreibung der Funktion der Steuerungseinrichtung, die diese Funktionsblöcke enthält.

Der Mikroprozessor 51 (Fig. 6) aktiviert das Ablauf-Steuerprogramm 56. Nach einem Taktsignal liest das Ablauf-Steuerprogramm 56 einen ersten Datensatz der Verknüpfungsinformationen 57. Die Verknüpfungsinformationen 57 werden gebildet durch eine Liste, die mehrere Datensätze enthält. Pro Aufruf eines Funktionsblocks 70 ist ein Datensatz vorhanden.

Die Liste der Verknüpfungsinformationen 57 kann die einzelnen Datensätze in beliebiger Reihenfolge enthalten. Der Aufruf der Datensätze dieser Liste kann vorteilhaft in einer solchen Reihenfolge erfolgen, daß die Funktionsblöcke 70A bis 70L in der in der Fig. 10 dargestellten Ordnung von oben nach unten und von links nach rechts aufgerufen werden. Es ist aber auch möglich, die Reihenfolge nicht derart zu strukturieren und stattdessen vorteilhaft die Reihenfolge gemäß den Ablaufinformationen 60 zu steuern. Die Ablaufinformationen 60 enthalten dann die Reihenfolge des Aufrufs der einzelnen Funktionsblöcke 70.

Für den nachfolgend dargestellten Ablauf sei angenommen, daß die Abarbeitung gemäß der oben dargestellten Reihenfolge von oben nach unten und von links nach rechts erfolgt.

Folglich wird beim ersten Aufruf eines Funktionsblocks 70 durch das Ablauf-Steuerprogramm 56 der erste Funktionblock 70A aufgerufen. Beim Aufruf werden dem Funktionsblock 70A die zum ersten Aufruf gehörenden Parameter aus den Funktionsblock-Parametern 58 übergeben. Damit wird der in der Schnittstellen-Baugruppe 54A anliegende Wert des von der Außentemperatur abhängigen Werts des Widerstands des Außentemperaturfühlers 85 an den Funktionsblock 70A übergeben. Daß der Funktionsblock 70A dies überhaupt tun kann, ergibt sich den von Parametern der Funktionsblock-Parameter 58. Er erhält nämlich dadurch auch die Angabe, woher er seinen Eingangswert zu holen hat, beispielsweise die Adresse der ersten Schnittstellen-Baugruppe 54A. Vorteilhaft enthält der Parametersatz auch Daten über den Zusammenhang zwischen dem Widerstand und der Temperatur. Dieser Zusammenhang muß somit nicht im Funktionsblock 70A fest implementiert sein, sondern wird durch die übergebenen Parameter bestimmt. Das hat den Vorteil, daß der gleiche Funktionsblock 70A für unterschiedliche Typen von Meßwiderständen als Außentemperaturfühler 85 geeignet ist.

Der Funktionsblock 70A wandelt den Widerstandswert des Außentemperaturfühlers 85 in eine Temperatur um und speichert diesen in den Prozeßdaten 59 ab. Daß das geschieht, wird wiederum durch die dem Funktionsblock übergebenen Parameter bestimmt.

Vorteilhaft können dem Funktionsblock 70A auch Werte als Parameter übergeben werden, die es dem Funktionsblock 70A erlauben, ohne weiteres festzustellen, ob der Außentemperaturfühler 85 einwandfrei funktioniert. Wenn ein bestimmter Grenzwert des Widerstands nämlich unterschritten wird, dann liegt ganz offensichtlich ein Kurzschluß des Temperaturfühlers 85 vor. Wird ein anderer bestimmter Grenzwert des Widerstands überschritten, so liegt ganz offensichtlich ein Unterbruch im Temperaturfühler 85 vor. Auf diese Weise ist es möglich, daß der Funktionsblock 70A eine Störung signalisieren kann, die, wieder durch einen Parameter bestimmt, in die Prozeßdaten 59 geschrieben wird.

Damit ist der Funktionsblock 70A abgearbeitet und die Kontrolle des weiteren Ablaufs geht wieder an das Ablauf-Steuerprogramm 56 über. Dieses liest nun wiederum die Verknüpfungsinformationen 57. Der nächste Datensatz der Verknüpfungsinformationen 57 führt zum Aufruf des Funktionsblocks 70B mit dem nächsten Satz der Funktionsblock-Parameter 58. Dieser Parameter-Satz enthält die Werte für den unteren Grenzwert $W_U$, für den oberen Grenzwert $W_O$ und die Angaben, daß als Eingangssignal der vom Funktionsblock 70A in die Prozeßdaten 59 geschriebene Wert übernommen und als Ausgangssginal ein Wert zur Übergabe an den Funktionsblock 70D in die Prozeßdaten 59 geschrieben werden soll.

Der Funktionsblock 70B vom Typ "STETIG ZWEIPUNKT" hat das zuvor ausführlich geschilderte Verhalten. Unter Berücksichtigung der Grenzwerte $W_U$, $W_O$ und jenes Parameters, der das Schaltverhalten bestimmt, wird vom Funktionsblock 70B ein Ausgangssignal in Form einer Schaltbedingung $S_1$ ermittelt und wiederum in die Prozeßdaten 59 geschrieben.

Nach der Abarbeitung des Funktionsblocks 70B liest das Ablauf-Steuerprogramm 56 den nächsten Datensatz der Verknüpfungsinformationen 57. Dadurch wird der Funktionsblock 70D aufgerufen. Zu seinem Parametersatz der Funktionsblock-Parameter 58, die beim Aufruf in den Parameter-Satz 75 des Funktionsblocks 70D geschrieben werden, gehören Schaltzeitpunkte für das Ein- und das Ausschalten und die aktuelle Systemzeit. Aufgrund dieser Parameter ermittelt der Funktionsblock 70D, ob das zu schaltende Organ gemäß den Zeit-Schaltbedingungen ein- oder ausgeschaltet sein muß, und übergibt eine Schaltbedingung $S_2$ an den entsprechenden Speicherplatz der Prozeßdaten 59.

Der nächste Datensatz führt zum Aufruf des Funktionsblocks 70C mit gleichzeitiger Übergabe der zugehörigen Parameter. Durch diese Parameter wird festgelegt, welche Auswahlart der Funktionsblock 70C bei diesem Aufruf vornehmen soll. Für diesen Fall ist in den Parameter-Satz 75 eingeschrieben worden, daß die Auswahl von der Art "UND-Verknüpfung" sein soll und daß zwei Eingänge zu verknüpfen sind. Ebenfalls im Parameter-Satz steht, daß dem einen Eingang die Schaltbedingung $S_1$, und dem anderen Eingang die Schaltbedingung $S_2$ zugeordnet sind, die aus den Prozeßdaten 59 gelesen werden. Der Funktionsblock 70C verknüpft die beiden an seinen Eingängen anliegenden Schaltbedingungen $S_1$ und $S_2$ gemäß einer UND-Funktion und schreibt das Ergebnis als Schaltbedingung $S_3$ an den entsprechenden Speicherplatz der Prozeßdaten 59. Die Schaltbedingung $S_3$ enthält nun die Information, ob die Lüftung gemäß Temperatur- und Zeitschalt-Kriterium ein- oder ausgeschaltet sein muß.

Der nächsten Verknüpfungsinformation entsprechend wird der Funktionsblock 70E unter Übergabe seiner Parameter aus den Funktionsblock-Parametern 58 an den Parameter-Satz 75 des Funktionsblocks 70E aufgerufen. Im Parameter-Satz 75 ist nun die Information enthalten, daß für diesen Aufruf gültig ist, daß der Funktionsblock 70E zwei Ausgänge zu steuern hat und daß er beim Einschalten zuerst den ersten Ausgang ansteuern soll und erst nach einer ebenfalls im Parameter-Satz 75 enthaltenen Verzögerungszeit $t_{V1}$ den zweiten Ausgang. Im Parameter-Satz 75 ist außerdem enthalten, wie die Reihenfolge beim Abschalten sein soll und wie groß die Verzögerung sein soll.

Der Funktionsblock 70E ermittelt aus dem Werten an seinem Eingang und den Verzögerungszeiten $t_{V1}$, und $t_{V2}$ unter Berücksichtigung des Systemzeitablaufs einen ersten Schaltbefehl $B_{11}$ und einen zweiten Schaltbefehl $B_{12}$ und schreibt diese Befehle in die Prozeßdaten 59.

Anschließend erfolgt, vom Ablauf-Steuerprogramm 56 in zuvor beschriebener Weise gesteuert, der Aufruf des Funktionsblocks 70F unter Übergabe von Parametern an seinen Parameter-Satz 75. Beim Aufruf wird der Schaltbefehl $B_{11}$ aus den Prozeßdaten 59 in den Funktionsblock 70F eingelesen. Der Funktionsblock 70F prüft, ob der Schaltbefehl $B_{11}$ in einen EIN- oder AUS-Schaltbefehl umgesetzt werden kann bzw. muß. Diese Prüfung kann beispielsweise dadurch erfolgen, daß an den Funktionsblock 70F angeschlossene, hier aber der Übersichtlichkeit wegen weggelassener Überwachungsorgane des anzusteuernden Motors wie Motorschütz und/oder Strömungswächter, geprüft werden. Solche Überwachungsorgange können in analoger Weise wie die Motoren der Ventilatoren 81 und 82 über weitere Schnittstellen-Baugruppen 54 angeschlossen sein.

Der Funktionsblock 70F erzeugt einen Schaltbefehl $B_{21}$ für den Motor des Zuluft-Ventilators 81. Dieser Schaltbefehl $B_{21}$ wird in die Prozeßdaten 59 geschrieben.

Als nächstes erfolgt nun durch das Ablauf-Steuerprogramm 56 der Aufruf des Funktionsblocks 70G. Das ist ein Aufruf des identischen Funktionsblocks wie beim Aufruf des Funktionsblocks 70F, jedoch unter Übergabe anderer Parameter aus den Funktionsblock-Parametern 58. Bei diesem Aufruf wird dem Funktionsblock 70G der Schaltbefehl $B_{12}$ übergeben. Der Funktionsblock 70G erzeugt einen Schaltbefehl $B_{22}$ für den Motor des Abluft-Ventilators 82. Der Schaltbefehl $B_{22}$ wird in die Prozeßdaten 59 geschrieben.

Gesteuert vom Ablauf-Steuerprogramm 56 erfolgt nun der Aufruf des Funktionsblocks 70H. Dabei wird der Schaltbefehl $B_{21}$ aus den Prozeßdaten 59 eingelesen und in einen Schaltbefehl $B_{31}$ umgesetzt. Im aktualisierten Parameter-Satz 75 ist enthalten, an welche Schnittstellen-Baugruppe 54 der Befehl zu übermitteln ist. Das kann eine Adresse der Schnittstellen-Baugruppe 54B sein. Damit wird nun die Schnittstellen-Baugruppe 54B angesteuert, die den effektiven Schaltbefehl für den Motor des Zuluft-Ventilators 81 erzeugt.

Daran anschließend erfolgt, wiederum vom Ablauf-Steuerprogramm 56 gesteuert, der Aufruf des Funktionsblocks 70I. Das ist der zweite Aufruf des Funktionsblocks vom Typ "BEFEHLSAUSGABE" und von ihm wird in analoger Weise die Schnittstellen-Baugruppe 54C angesteuert, die den Motor des Abluft-Ventilators 82 schaltet.

Der nächste Funktionsblock 70, der vom Ablauf-Steuerprogramm 56 abgearbeitet wird, ist der Funktionsblock 70K. Er liest von der Schnittstellen-Baugruppe 54D den Schaltzustand des Strömungswächters 83 ein und schreibt ein entsprechendes Stellungssignal in die Prozeßdaten 59 ein. In gleicher Weise liest der nachfolgend abgearbeitete Funktionsblock 70L den Schaltzustand des Strömungswächters 84 von der Schnittstellen-Baugruppe 54E ein und schreibt ein entsprechendes Stellungssignal in die Prozeßdaten 59 ein.

Die Kontrolle geht wiederum an das Ablauf-Steuerprogramm 56 zurück. Dieses stellt fest, daß keine weitere Verknüpfungsinformation vorhanden ist, sondern beispielsweise ein "END OF DATA"-Signal, und kehrt zum ersten Aktionsblock 61 zurück. Trifft das nächste Taktsignal ein, erfolgt die nochmalige Abarbeitung aller Funktionsblöcke 70A bis 70I in der zuvor beschriebenen Weise. Dies wiederholt sich zyklisch.

In der vorangehenden Darstellung der Funktionsweise der Steuerungseinrichtung wurde nur beschrieben, wie zwischen den Funktionsblöcken 70B bis 70I Steuerinformationen als Verknüpfungsinformationen 57 übergeben werden. In gleicher Weise werden jedoch auch Rückmeldeinformationen ausgetauscht.

Eine Steuerungseinrichtung der zuvor beschriebenen Art zeichnet sich dadurch aus, daß sie sehr einfach zu programmieren ist. Ein Programmieren in dem Sinn, daß ein Programmcode erzeugt werden müßte, ist gar nicht nötig. Das Programmieren der Steuerungseinrichtung erschöpft sich in folgenden Schritten:
- Auswahl jener Funktionsblöcke, die zur Lösung der Steueraufgabe nötig sind,

17

- Verknüpfung der Ein- und Ausgänge der verschiedenen Funktionsblöcke gemäß einem aufzustellenden Schema, das aus dem Anlagenschema abgeleitet werden kann, und
- Festlegen der Parameter.

Es ist weiter vorteilhaft, wenn der einem Funktionsblock 70 zugehörige Parameter-Satz 75 voreingestellte, sogenannte Default-Werte enthält. In dem Fall müssen beim Ausführen der oben genannten Schritte weniger Parameter spezifiziert und beim Abarbeiten des Funktionsblocks 70 weniger Parameter von den Funktionsblock-Parametern 58 an den Parameter-Satz 75 übergeben werden.

Dadurch, daß die Funktionsblöcke durch Parameter charakterisiert sind, ist es möglich, einen Funktionsblock bestimmter Funktion mit einem bestimmten Parameter-Satz gegen einen anderen mit gleicher Funktion und mit dem gleichen Parameter-Satz auszutauschen, ohne daß Verknüpfungen zu anderen Funktionsblöcken beachtet oder gar geändert werden müßten. Dies erlaubt die Fortentwicklung des Programmcodes eines Funktionsblocks, ohne daß dadurch Änderungen an den Verknüpfungsinformationen 57 oder an den Funktionsblock-Parametern 58 nötig wären.

Das Konzept der Aufteilung des Programmcodes in einzelne Funktionsblöcke einer Funktionsblock-Bibliothek 55 ermöglicht es, jeden Funktionsblock selbständig zu testen. Gleichzeitig ist es möglich, später für neue Steueraufgaben neue Funktionsblöcke zur Funktionsblock-Bibliothek 55 hinzuzufügen. Die Funktionsblock-Bibliothek 55 ist in einem Read-Only-Festwertspeicher enthalten. Durch Ersatz dieser Speicherbausteine durch andere mit einer neueren, erweiterten Version der Funktionsblock-Bibliothek 55 ist es möglich, die Steuerungseinrichtung für erweiterte Aufgaben zu benützen, ohne daß dabei die bisherige Struktur der Verknüpfungsinformationen 57 und der Funktionsblock-Parameter 58 geändert werden müßte. Dies ermöglicht die Aufwärtskompatibilität der Steuerungseinrichtung.

Die Parameter können effektive Werte sein, aber auch Pointer auf bestimmte Adressen, in denen Werte abgelegt sind.

Die Reihenfolge der Abarbeitung der einzelnen Funktionsblöcke 70 kann auch durch Ablaufinformationen 60 bestimmt werden. Dadurch läßt sich eine Optimierung des Ablaufs erreichen.

Es ist vorteilhaft, wenn die Verknüpfungsinformationen 57, die Funktionsblock-Parameter 58 und Ablaufinformationen 60 in einem unverlierbaren Speicher gespeichert sind.

Bei der eben beschriebenen Ausgestaltungsform entspricht ein Funktionsblock 70 funktionell einem Steuermodul 1 der anfangs beschriebenen Ausführungsform und die Summe der Verknüpfungsinformationen 57 entspricht der Summe aller Verdrahtungen zwischen Steuermodulen 1, Aggregat-Modulen 34 und Schnittstellen-Modulen 33.

Die Ausführungsform der Steuerungseinrichtung als programmierbare Steuerungseinrichtung mit einem Mikroprozessor 51 läßt sich zu niedrigeren Herstellungskosten verwirklichen als die andere Ausführungsform mit diskreten Logikschaltungen auf Steckkarten.

In Steuerungseinrichtungen der zuvor beschriebenen Arten lassen sich auch Regelfunktionen integrieren, sei es als Regelmodule in der Art der Steuermodule 1, sei es in Form von Funktionsblöcken 70.


**Patentansprüche**

1. Steuermodul zum Aufbau von Steuerungseinrichtungen für betriebstechnische Anlagen, das über uni- und bidirektionale Schnittstellen mit Steuermodulen gleichen oder anderen Typs verbindbar ist, wobei aus solchen Steuermodulen einerseits Steuerketten für Aggregate der betriebstechnischen Anlage und andererseits Rückmelde- und Verriegelungsketten gebildet werden,
   **dadurch gekennzeichnet,**
   daß das Steuermodul (1) einen Steuereingang (2) zur Entgegennahme von Steuerinformationen von einem übergeordneten Modul (1,33) und einen Rückmeldeausgang (3) zur Abgabe von Rückmeldeinformationen an das übergeordnete Modul (1,33) besitzt,
   daß das Steuermodul (1) mindestens zwei Steuerausgänge (4) zur Ausgabe von Steuerinformationen an nachgeordnete Module (1,33,34) und mindestens zwei Rückmeldeeingänge (5) zur Entgegennahme von Rückmeldeinformationen von nachgeordneten Modulen (1,33,34) besitzt,
   daß das Steuermodul (1) eine an seinem Steuereingang (2) anstehende Steuerinformation in einer durch Parameter des Steuermoduls (1) bestimmten Weise an die Steuerausgänge (4) transformiert,
   daß das Steuermodul (1) an seinen Rückmeldeeingängen (5) anstehende Rückmeldeinformationen in einer ebenfalls durch Parameter des Steuermoduls (1) bestimmten Weise an den Rückmeldeausgang (3) transformiert,
   daß die Rückmeldeinformationen innerhalb des Steuermoduls (1) auf die Verarbeitung der Steuerinformationen einwirken,

daß die Steuerinformationen und die Rückmeldeinformationen aus einer Mehrzahl vordefinierter Signale bestehen

und daß die Steuerein- und ausgänge und Rückmeldeaus- und eingänge unter- und übergeordneter Module definiert zugeordnet sind.

2. Steuermodul nach Anspruch 1, dadurch gekennzeichnet, daß die Steuerinformationen aus drei Signalen "Befehl", Freigabe" und "Verriegelung" bestehen.

3. Steuermodul nach Anspruch 1 oder 2, dadurch gekennzeichnet, daß die Rückmeldeinformationen aus drei Signalen "Bereit", "Betrieb" und "Störung" bestehen.

4. Steuermodul nach einem der Ansprüche 1 bis 3, dadurch gekennzeichnet, daß innerhalb des Steuermoduls (1) Zeit-Parameter speicherbar sind, mit denen die Transformation der Steuerinformationen und/oder der Rückmeldeinformationen beeinflußbar ist.

5. Steuermodul nach einem der Ansprüche 1 bis 4, dadurch gekennzeichnet, daß in einem Befehlseinschränkungsblock (10) Steuerinformationen nach Priorität verarbeitbar sind, daß in einem Befehlsgenerierungsblock (11) Befehle für nachgeordnete Module (1, 33, 34) erzeugbar sind, daß in einem Meldungsaufbereitungsblock (12) Rückmeldeinformationen nachgeordneter Module (1, 33, 34) verarbeitbar sind und daß ein Überwachungsblock (13) auf den Befehlsgenerierungsblock (10) einwirkt.

6. Steuermodul nach einem der Ansprüche 1 bis 5, dadurch gekennzeichnet, daß das Steuermodul (1) einen Hilfssteuereingang (6) aufweist.

7. Steuermodul nach Anspruch 6, dadurch gekennzeichnet, daß am Hilfssteuereingang (6) anliegende Hilfssteuerinformationen aus drei Signalen "Hand", "Not-Ein" und "Not-Aus" bestehen.

8. Steuermodul nach einem der Ansprüche 1 bis 7, dadurch gekennzeichnet, daß innerhalb des Steuermoduls (1) ein Satz von Parametern speicherbar ist, der die Verarbeitung der Rückmeldeinformationen beeinflußt.

9. Steuermodul nach Anspruch 8, dadurch gekennzeichnet, daß ein Parameter "Störabschaltung" festlegbar ist, der die Werte "Ein" und "Aus" annehmen kann.

10. Steuermodul nach Anspruch 8 oder 9, dadurch gekennzeichnet, daß ein Parameter "Störungsüberwachung" festlegbar ist, der die Werte "Ein" und "Aus" annehmen kann.

11. Steuermodul nach einem der Ansprüche 8 bis 10, dadurch gekennzeichnet, daß ein Parameter "Bereitschafts-Überwachung" festlegbar ist, der die Werte "Ein" und "Aus" annehmen kann.

12. Steuermodul nach einem der Ansprüche 8 bis 11, dadurch gekennzeichnet, daß ein Paramter "Betriebs-Überwachung" festlegbar ist, der die Werte "Ein" und "Aus" annehmen kann.

13. Steuermodul nach einem der Ansprüche 1 bis 12, dadurch gekennzeichnet, daß die Steuerausgänge (4; 4.1, 4.2) in einer durch Parameter des Steuermoduls (1) bestimmten Reihenfolge aktivierbar sind.

14. Steuermodul nach einem der Ansprüche 1 bis 12, dadurch gekennzeichnet, daß die Steuerausgänge (4; 4.1, 4.2) gleichzeitig aktivierbar sind.

15. Steuermodul nach einem der Ansprüche 3 bis 12, dadurch gekennzeichnet, daß ein zweiter Steuerausgang (4.2) dann aktiviert wird, wenn an einem zum ersten Steuerausgang (4.1) zugehörigen ersten Rückmeldeeingang (5.1) eine Störungsmeldung anliegt.

16. Einrichtung zur Steuerung betriebstechnischer Anlagen, dadurch gekennzeichnet, daß mindestens zwei Steuermodule (1) nach einem der Ansprüche 1 bis 15 derart miteinander verknüpft sind, daß ein Steuerausgang (4) des einen Steuermoduls (1) mit dem Steuereingang (2) eines anderen Steuermoduls (1) und ein Rückmeldeeingang (5) des einen Steuermoduls (1) mit dem Rückmeldeausgang (3) des anderen Steuermoduls (1) verbunden sind.

**Claims**

1. A control module for the construction of control apparatuses for industrial-process installations, which can be connected by unidirectional and bidirectional interfaces to control modules of the sane or another type, wherein formed from such control modules are on the one hand control chains for units of the industrial-process installation and on the other hand return-signal and disable chains,
   characterised in that
   the control module (1) has a control input (2) for receiving items of control information from a higher module (1, 33) and a return-signal output (3) for the output of items of return-signal information to the higher module (1, 33),
   the control module (1) has at least two control outputs (4) for the output of items of control information to subordinate modules (1, 33, 34) and at least two return-signal inputs (5) for receiving items of return-signal information from subordinate modules (1, 33, 34),
   the control module (1) transforms an items of control information at its control input (2) to the control outputs (4) in a manner determined by parameters of the control module (1),
   the control module (1) transforms items of return-signal information at its return-signal inputs (5) to the return-signal output (3) in a manner which is also determined by parameters of the control module (1),
   the items of return-signal information act within the control module (1) on the processing of the items of control information,
   the items of control information and the items of return-signal information comprise a multiplicity of pre-defined signals, and
   the control inputs and outputs and the return-signal outputs and inputs of subordinate and higher modules are definedly associated.

2. A control module according to claim 1 characterised in that the items of control information comprise three signals "command", "enable" and "disable".

3. A control module according to claim 1 or claim 2 characterised in that the items of return-signal information comprise three signals "ready", "operation" and "fault".

4. A control module according to one of claims 1 to 3 characterised in that time parameters with which the transformation of the items of control information and/or the items of return-signal information can be influenced can be stored within the control module (1).

5. A control module according to one of claims 1 to 4 characterised in that items of control information can be processed in accordance with priority in a command limitation block (10), that commands for subordinate modules (1, 33, 34) can be generated in a command generation block (11), that items of return-signal information of subordinate modules (1, 33, 34) can be processed in a message preparation block (12) and that a monitoring block (13) acts on the command generation block (10).

6. A control module according to one of claims 1 to 5 characterised in that the control module (1) has an auxiliary control input (6).

7. A control module according to claim 6 characterised in that items of auxiliary control information at the auxiliary control input (6) comprise three signals "manual", "emergency-on" and "emergency-off".

8. A control module according to one of claims 1 to 7 characterised in that a set of parameters which influences the processing of the items of return-signal information can be stored within the control module (1).

9. A control module according to claim 8 characterised in that a parameter "fault shut-down" which can assume the values "on" and "off" can be specified.

10. A control module according to claim 8 or claim 9 characterised in that a parameter "fault monitoring" which can assume the values "on" and "off" can be specified.

11. A control module according to one of claims 8 to 10 characterised in that a parameter "readiness monitoring" which can assume the values "on" and "off" can be specified.

12. A control module according to one of claims 8 to 11 characterised in that a parameter "operation monitoring" which can assume the values "on" and "off" can be specified.

13. A control module according to one of claims 1 to 12 characterised in that the control outputs (4; 4.1, 4.2) can be activated in a sequence which is determined by parameters of the control module (1).

14. A control module according to one of claims 1 to 12 characterised in that the control outputs (4; 4.1, 4.2) can be simultaneously activated.

15. A control module according to one of claims 3 to 12 characterised in that a second control output (4.2) is activated when a fault signal occurs at a first return-signal input (5.1) associated with the first control output (4.1).

16. Apparatus for the control of industrial-process installations characterised in that at least two control modules (1) according to one of claims 1 to 15 are connected together in such a way that a control output (4) of the one control module (1) is connected to the control input (2) of another control module (1) and a return-signal input (5) of the one control module (1) is connected to the return-signal output (3) of the other control module (1).


**Revendications**

1. Module de commande destiné à constituer des dispositifs de commande pour installations techniques industrielles, qui peut être relié par des interfaces unidirectionnelles et bidirectionnelles à des modules de commande du même type ou d'un autre type, de tels modules de commande permettant de réaliser d'une part, des chaînes de commande pour des groupes de l'installation technique industrielle et d'autre part des chaînes de réponse et de verrouillage,
   caractérisé en ce que
   le module de commande (1) possède une entrée de commande (2) pour recevoir des informations de commande en provenance d'un module supérieur (1, 33) et une sortie de réponse (3) pour envoyer des informations de réponse au module supérieur (1, 33),
   en ce que le module de commande (1) comporte au moins deux sorties de commande (4) pour envoyer des informations de commande à des modules subordonnés (1, 33, 34) et au moins deux entrées de réponses (5) pour recevoir des informations de réponse en provenance de modules subordonnés (1, 33, 34),
   en ce que le module de commande (1) transforme aux sorties de commande (4), d'une manière définie par des paramètres du module de commande (1), une information de commande présente à son entrée de commande (2),
   en ce que le module de commande (1) transforme à ses sorties de réponse (3), d'une manière définie elle aussi par des paramètres du module de commande (1), des informations de réponse présentes à ses entrées de réponse (5),
   en ce que les informations de réponse influencent le traitement des informations de commande à l'intérieur du module de commande (1),
   en ce que les informations de commande et les informations de réponse se composent de plusieurs signaux prédéfinis,
   et en ce que les entrées et les sorties de commande et les entrées et les sorties de réponses de modules supérieurs et subordonnés sont associées de façon définie.

2. Module de commande selon la revendication 1, caractérisé en ce que les informations de commande se composent de trois signaux: "ordre", "libération" et "verrouillage".

3. Module de commande selon la revendication 1 ou 2, caractérisé en ce que les informations de réponse se composent de trois signaux : "disponibilité", "fonctionnement" et "dérangement".

4. Module de commande selon l'une des revendications 1 à 3, caractérisé en ce que des paramètres temporels, au moyen desquels la transformation des informations de commande et/ou des informations de réponse peuvent être influencés, peuvent être mémorisés à l'intérieur du module de commande (1).

5. Module de commande selon l'une des revendications 1 à 4, caractérisé en ce que des informations de commande peuvent être traitées en fonction de leur priorité dans un bloc de restriction (10) d'ordres, en ce que des ordres destinés à des modules subordonnés (1, 33, 34) peuvent être engendrés dans un bloc de génération (11) d'ordres, en ce que des informations de réponse de modules subordonnés (1, 33, 34) peuvent être traitées dans un bloc de préparation (12) de réponses et en ce qu'un bloc de surveillance (13) influence le bloc de génération (11) d'ordres.

6. Module de commande selon l'une des revendications 1 à 5, caractérisé en ce que le module de commande (1) comporte une entrée de commande d'assistance (6).

7. Module de commande selon la revendication 6, caractérisé en ce que des informations de commande d'assistance présentes à l'entrée de commande d'assistance (6) se composent de trois signaux "manuel", "urgence en service" et "urgence hors service".

8. Module de commande selon l'une des revendications 1 à 7, caractérisé en ce qu'un ensemble de paramètres qui influence le traitement des informations de réponse peut être mémorisé à l'intérieur du module (1).

9. Module de commande selon la revendication 8, caractérisé en ce qu'un paramètre "interruption pour dérangement" qui peut prendre les valeurs "en service" et "hors service" peut être spécifié.

10. Module de commande selon la revendication 8 ou 9, caractérisé en ce qu'un paramètre "surveillance de dérangement" qui peut prendre les valeurs "en service" et "hors service" peut être spécifié.

11. Module de commande selon l'une des revendications 8 à 10, caractérisé en ce qu'un paramètre "surveillance de disponibilité" qui peut prendre les valeurs "en service" et "hors service" peut être spécifié.

12. Module de commande selon l'une des revendications 8 à 11, caractérisé en ce qu'un paramètre de "surveillance de fonctionnement" qui peut prendre les valeurs "en service" et "hors service" peut être spécifié.

13. Module de commande selon l'une des revendications 1 à 12, caractérisé en ce que les sorties de commande (4 ; 4.1, 4.2) peuvent être activées en série d'une manière définie par des paramètres du module de commande (1).

14. Module de commande selon l'une des revendications 1 à 12, caractérisé en ce que les sorties de commande (4, 4.1, 4.2) peuvent être activées simultanément.

15. Module de commande selon l'une des revendications 3 à 12, caractérisé en ce qu'une deuxième sortie de commande (4.2) peut être activée lorsqu'une réponse de dérangement est présente à une première entrée de réponse (5.1) associée à la première sortie de commande (4.1).

16. Dispositif de commande d'installation technologique industrielle caractérisé en ce qu'au moins deux modules de commande (1) conformes à l'une des revendications 1 à 15 sont connectés entre eux d'une manière telle qu'une sortie de commande (4) d'un premier module de commande (1) est relié à l'entrée de commande (2) d'un autre module de commande (1) et une entrée de réponse (5) du premier module de commande (1) est reliée à la sortie de réponse (3) de l'autre module de commande (1).

EP 0 503 255 B1

# Fig. 1

# Fig. 2

# Fig. 3

# Fig. 4

# Fig. 5

# Fig. 6

# Fig. 7

# Fig. 8

Fig. 9

Fig. 10

85

54A

70A

70B     70D

70C

70E

70F     70G

70H     70I

70K     54B     54C     70L

54D

83          81          82          84